# EUROPÄISCHE PATENTSCHRIFT

(11) **EP 4 517 531 B1**
(45) Veröffentlichungstag und Bekanntmachung des Hinweises auf die Patenterteilung: **03.06.2026**
(21) Anmeldenummer: 23194137.8
(22) Anmeldetag: 30.08.2023
(51) Int. Cl.: G06F 11/14, G06F 11/16, G06F 11/18

(54) **VERFAHREN ZUM DURCHFÜHREN EINES TECHNISCHEN PROZESSES IM REGELBETRIEB UND REPARATURBETRIEB**
METHOD FOR CARRYING OUT A TECHNICAL PROCESS IN THE CONTROL MODE AND REPAIR MODE
PROCÉDÉ POUR EXÉCUTER UN PROCESSUS TECHNIQUE EN MODE DE CONTRÔLE ET MODE
DE RÉPARATION

(43) Veröffentlichungstag der Anmeldung: 05.03.2025
(73) Patentinhaber: Siemens Mobility GmbH, 80997 München (DE)
(72) Erfinder: SCHALLENBERG, Andreas, 31224 Peine (DE); GERKEN, Stefan, 38116 Braunschweig (DE); BOLZ, Matthias, 38106 Braunschweig (DE); ECKELMANN-WENDT, Uwe, 38302 Wolfenbüttel (DE); FRECHILLA DAZA, Faustino, 28760 Tr5es Cantos (ES); MEYA DELFA, Fernando, 28025 Madrid (ES); GARCIA CANO, Jose Luis, 28020 Madrid (ES)
(74) Vertreter: Siemens Patent Attorneys

(56) Entgegenhaltungen:
- EP-A1- 0 768 776
- EP-A1- 2 884 392
- EP-A1- 4 009 173

## Beschreibung

### Technisches Gebiet

Folgender Gegenstand ist von der Erfindung umfasst: ein Verfahren zum Durchführen eines technischen Prozesses. Ferner ist folgender Gegenstand von der Erfindung umfasst: Computerprogrammprodukt mit Programmbefehlen. Ferner ist folgender Gegenstand von der Erfindung umfasst: Bereitstellungsvorrichtung für das Computerprogrammprodukt nach dem letzten voranstehenden Anspruch.

### Technischer Hintergrund

Bahnautomatisierungssysteme, d.h. im Bereich der Bahnautomatisierung eingesetzte Kommunikationsnetze beziehungsweise Steuerungssysteme, müssen im Rahmen ihres Betriebs hohe Anforderungen an die korrekte und zuverlässige Funktion der Komponenten sowie Übertragung von Nachrichten, etwa in Form von Steuerungsinformationen, erfüllen. Ursache hierfür ist, dass die entsprechenden Abläufe (Rechenoperationen, Datenspeicherung Nachrichtenübertragungen) unmittelbare Auswirkungen auf die Betriebssicherheit, die auch als "Safety" bezeichnet wird, haben. Entsprechende Bahnautomatisierungssysteme bestehen üblicherweise aus zumindest einer Kontrolleinheit, die eine Vielzahl von Endgeräten steuert oder von diesen Informationen abfragt und hierzu ein entsprechendes Kommunikationsnetz verwendet. Eine Eigenheit von Bahnautomatisierungssystemen ist hierbei, dass sie üblicherweise eine große Anzahl von Geräten beziehungsweise Einheiten umfassen sowie häufig geografisch ausgedehnt sind, sodass sich ein verteiltes System mit Komponenten an unterschiedlichen Orten ergibt.

In dem Dokument EP 3676991 A1 ist beispielsweise beschrieben, dass zumindest die Übertragung von Nachrichten beim Betrieb von Bahnautomatisierungssystem nach einem Publish-Subscribe-Verfahren durchgeführt werden kann, um eine betriebssichere Übertragungstechnik anzubieten, die eine höhere Flexibilität hinsichtlich Konfiguration und Skalierbarkeit gewährleistet.

Dokument EP 2 884 392 A1 beschreibt ein computerimplementiertes Verfahren zum Erkennen eines Fehlers in einem System, das die folgenden Schritte umfasst: Ausführen von mindestens drei virtuellen Maschinen, wobei jede virtuelle Maschine dieselbe Anwendungssoftware in getrennten und isolierten Speichersegmenten und in einem dedizierten Kern eines Mehrkernprozessors ausführt; wobei die virtuellen Maschinen synchronisiert und gleichzeitig von einem gemeinsamen Hypervisor ausgeführt werden; wobei fehlerfreie virtuelle Maschinen innerhalb eines vordefinierten Zeitintervalls eine identische Ausgabenachricht bereitstellen; Erkennen eines Fehlers in einer Ausgabe einer virtuellen Maschine, wobei der Fehler einer anderen Ausgabenachricht der fehlerhaften virtuellen Maschine entspricht.

Um sicherheitsrelevante Rechenumgebungen abzusichern, ist es außerdem bekannt, dass auf einem Rechner in mehreren Recheninstanzen zuverlässig nur die Komponenten installiert werden, welche für die Bearbeitung der betreffenden Applikation verwendet werden. Läuft die Applikation dann parallel in mehreren Recheninstanzen ab, kann durch ein Voting in an sich bekannter Weise festgestellt werden, ob Fehler bei der Berechnung auftreten, wodurch auch Speicherfehler aufgedeckt werden können.

Gemäß der WO 2014/00924382 ist ein Verfahren und ein Rechner beschrieben, welches/welcher einen Prüfalgorithmus für die Verarbeitung von Applikationen in der durch den Rechner gebildeten Rechenumgebung aufweist. Auf dem Rechner sind Applikationsprogramme installiert, die redundant ausgeführt werden, sodass der Prüfalgorithmus eine Möglichkeit hat, durch einen Vergleich der Berechnungsergebnisse Fehler aufzudecken (wie erwähnt auch Voting genannt).

Dieses Verfahren ist jedoch mit einem bedeutenden Aufwand an Hardware verbunden und lässt überdies bei bestimmten Konstellationen keine zuverlässige Fehlererkennung zu. Wenn ein Fehler erkannt wird, müssen die an der Entstehung des Fehlers beteiligten Komponenten des Bahnautomatisierungssystems aus Gründen der Betriebssicherheit isoliert werden. Stehen nicht mehr genügend funktionsfähige Komponenten zur Verfügung, muss das Bahnautomatisierungssystem neu initialisiert werden, was mit einer Unterbrechung des Bahnbetriebs einhergeht. Zugverspätungen sind zum Beispiel oft die Folge hiervon.

### Zusammenfassung der Erfindung

Die Aufgabe der Erfindung besteht darin, die beschriebenen Probleme im Stand der Technik zu beheben. Insbesondere ist es Aufgabe, dass ein Verfahren zum Durchführen eines technischen Prozesses mit Voting anzugeben, welches auch bei Erkennung von Fehlern möglichst lange weiterlaufen kann.

Beschrieben wird gemäß einem ersten Aspekt der Erfindung ein Verfahren zum Durchführen eines technischen Prozesses,
a) bei dem Applikationsprogramme in einer Vielzahl N (N ist eine natürliche Zahl) von unabhängigen Recheninstanzen redundant ausgeführt werden (wobei zum Ausführen der Applikationsprogramme in an sich bekannter Weise Nachrichten empfangen, bearbeitet und gesendet werden, letzteres, wenn Ergebnisse des Ausführens der Applikationsprogramme an andere Recheninstanzen oder an andere an dem technischen Prozess beteiligte Hardwarekomponenten übertragen werden sollen) und
b) auf der Basis eines MooN-Systems, wobei M (M ist eine natürliche Zahl) mindestens zwei und N mindestens drei ist, bei einem Voting ein Vergleichen der Vielzahl N von Ergebnissen des redundanten Ausführens der Applikationsprogramme durchgeführt wird, wobei
c) in dem Fall, dass eine Minderheit der Ergebnisse von einer Mehrheit der Ergebnisse identischen Inhalts verschieden ist, die besagte Minderheit von Ergebnissen bei dem Durchführen des technischen Prozesses unberücksichtigt bleibt.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Damit die Ausführung der Applikationsprogramme redundant ist, arbeiten die Recheninstanzen unabhängig voneinander. Damit ist gemeint, dass die ablaufenden Prozesse zur redundanten Ausführung des betreffenden Applikationsprogramms in den Recheninstanzen sich nicht gegenseitig beeinflussen. Vorzugsweise greifen Recheninstanzen auf jeweils reservierte Speicherbereiche einer Speichereinheit oder mehrerer Speichereinheiten zu. Vorzugsweise tauschen die Recheninstanzen, die ein Applikationsprogramme redundant ausführen, zum Zwecke der Ausführung des betreffenden Applikationsprogramms keine Nachrichten aus.

Ein Vergleicher, auch Voter genannt, ist eine Einrichtung zur Ermittlung einer Funktionsfähigkeit redundanter Systeme. Mehrheitsentscheidungssysteme, kurz MooN Systeme, werden der aktiven Redundanz zugeordnet (Majoritätsredundanz). Sie werden als Mittel zur Steigerung der Fehlertoleranz von Systemen, für die eine hohe Betriebssicherheit (Safety) gegen Ausfall oder Auftreten von Fehlern gefordert wird, eingesetzt. Es gibt verschiedene Architekturen von MooN Systemen. Praktische Anwendungen im Rahmen dieser Erfindung finden sich beispielsweise in triplex (2003) und quadruplex

(3004) Architekturen wieder. Die Ergebnisse der MooN Systeme werden von dem Mehrheitsentscheider (Voter) verglichen, um das Ergebnis der Mehrheit weiterzugeben. Die Weitergabe des Ergebnisses erfolgt, solange mindestens M der N Systeme funktionieren (gilt z. B. für Hardwarekomponenten und Maschinen) bzw. M der N Ergebnisse beim Vergleichen übereinstimmen (gilt z. B. für Daten und Messwerte). Anderenfalls gilt das Gesamtsystem als ausgefallen, und es kann ein Fehler ausgegeben werden und/oder eine Schutzmaßnahme (z. B. Anhalten des technischen Prozesses) eingeleitet werden.

Der Voter führt also nach dem Vergleichen eine Mehrheitsentscheidung durch. Dabei können folgende Fälle auftreten.
1. Alle Ergebnisse sind identisch (auch bei identischen Ergebnissen wird im Rahmen dieser Erfindungsbeschreibung von mehreren Ergebnissen gesprochen, in dem Sinne, dass diese von unterschiedlichen Recheninstanzen berechnet wurden. Mit anderen Worten ist das mathematische Verständnis, dass dasselbe Ergebnis nur ein Ergebnis ist, hier nicht von Bedeutung). Dies gilt als Nachweis, dass der technische Prozess in allen Recheninstanzen fehlerfrei läuft. Dieses jeweilige Ergebnis kann jeweils in der an dessen Zustandekommen beteiligten Recheninstanz zur weiteren Durchführung des technischen Prozesses verwendet werden oder Nachrichten an andere Recheninstanzen generieren.
2. Die Mehrheit der Ergebnisse ist identisch. Dies gilt als Nachweis, dass die Mehrheit dieser Ergebnisse richtig ist. Dieses jeweilige (mit anderen Ergebnissen identische) Ergebnis kann in der an dessen Zustandekommen beteiligten Recheninstanz zur weiteren Durchführung des technischen Prozesses verwendet werden oder Nachrichten an andere Recheninstanzen generieren, während Recheninstanzen, die ein abweichendes Ergebnis berechnet haben, von der Durchführung des technischen Prozesses ausgeschlossen werden.
3. Es gibt keine Mehrheit an identischen Ergebnissen. Dies bedeutet, dass sich entweder alle Ergebnisse voneinander unterscheiden oder die Zahl identischer Ergebnisse im Vergleich zu der Zahl von Ergebnissen, die sich von diesem Ergebnis unterscheiden, keine Mehrheit bilden. Dies gilt als Nachweis, dass das Risiko des Vorliegens eines Fehlers zu groß ist. Es muss eine Schutzmaßnahme für die Durchführung des technischen Prozesses durchgeführt werden. Diese kann beispielsweise darin bestehen, dass eine Warnmeldung ausgegeben wird oder die Durchführung des technischen Prozesses abgebrochen wird.

Ein Ausschluss aus der Menge der am technischen Prozess beteiligten (kurz beitragenden) redundanten Recheninstanzen, seien es einzelne oder das ganze Team, (mit Team ist die Gesamtheit der die betreffenden Prozessschritte redundant ausführenden Recheninstanzen gemeint) kann mittels Nachrichten kommuniziert werden, auch an die Recheninstanzen selbst. Die Recheninstanzen schalten sich ab (oder im Falle der Störung der Abschaltungsfunktion werden sie fremd abgeschaltet), wenn sie vom Voter als fehlerhaft identifiziert werden und können erfindungsgemäß anschließend fehlerfrei wieder hochgefahren werden (hierzu im Folgenden noch mehr).

Ein Voter kann softwaretechnisch oder hardwaretechnisch realisiert sein, wobei im Rahmen dieser Erfindung vorzugsweise ein softwaretechnischer Voter zum Einsatz kommt. Ein softwaretechnisch realisierter Voter besteht aus einem Programmmodul für das Vergleichen, auch Voting genannt, welches als Eingaben die oben genannten Ergebnisse verarbeitet und als Ausgabe einen Fehler oder auch eine Freigabe generiert. Hardwaretechnisch kann ein Voter auch als Analogrechner ausgeführt sein, der ein Voting durch eine logische Verknüpfung der Bausteine des Analogrechners durchführt. Insbesondere kann ein Programmmodul auch auf einem Prozessor laufen, der vorzugsweise selbst an der Erzeugung der Ergebnisse nicht beteiligt ist. Hierdurch entsteht eine hardwaretechnische Trennung der Aufgaben der Erzeugung der Ergebnisse auf der einen Seite und der Bewertung der Ergebnisse durch Vergleichen auf der anderen Seite. Dies hat den Vorteil, dass die Verfahrensschritte der Erzeugung der Ergebnisse sowie des Vergleichens der Ergebnisse sich weniger beeinflussen können und dadurch die Betriebssicherheit des Prozesses des Vergleichens zusätzlich gesteigert werden kann.

Erfindungsgemäß ist vorgesehen,
d) für den Fall gemäß c) (s.o.) die von der Erzeugung der Minderheit von Ergebnissen betroffene, mindestens eine Recheninstanz, von der Durchführung des technischen Prozesses ausgeschlossen wird,
e) für den Fall gemäß c) (s.o.) von einer von der neuen Initialisierung nicht betroffenen Recheninstanz (d. h. von einer von der Erzeugung der Mehrheit der Ergebnisse betroffenen Recheninstanz) von einem neu zu initialisierenden Status eine Zustandskopie erstellt wird und alle ab Erstellung der Zustandskopie an die Recheninstanzen gesendeten Nachrichten (in Form von Datensätzen) und deren Reihenfolge gespeichert werden, sowie
f) bei der neuen Initialisierung der Status der betroffenen Recheninstanz entsprechend der Zustandskopie hergestellt wird und alle gespeicherten Nachrichten in der gespeicherten Reihenfolge von der betroffenen Recheninstanz bearbeitet werden, bis die betroffene Recheninstanz wieder synchron mit den nicht von der neuen Initialisierung betroffenen Recheninstanzen läuft,
g) danach die (vormals von der Erzeugung der Minderheit von Ergebnissen) betroffene mindestens eine Recheninstanz wieder in den technischen Prozess eingegliedert wird.

Wenn die betroffene mindestens eine Recheninstanz wieder in den technischen Prozess eingegliedert wird, bedeutet dies, dass diese wieder synchron mit den vormals im technischen Prozess verbliebenen Recheninstanzen arbeitet. Mit anderen Worten erzeugt die wieder eingegliederte Recheninstanz die erforderlichen Ergebnisse in einer derartigen zeitlichen Nähe zu den anderen Recheninstanzen, dass die Ergebnisse wieder allesamt nach Eingliederung in den Prozess, wie oben beschrieben, durch den Voter verglichen werden können.

Ein Vorteil der Erfindung besteht darin, dass Recheninstanzen, die auf Grund des Votings von dem technischen Prozess ausgeschlossen wurden, sich mit anderen Worten also in Quarantäne befinden, im Rahmen des erfindungsgemäßen Verfahrens "repariert" und nach Synchronisierung wieder in den technischen Prozess eingegliedert werden können. Dies bedeutet vorteilhaft, dass der technische Prozess auch bei wiederholtem Auftreten von Fehlern dauerhaft weiter betrieben werden kann. Voraussetzung ist lediglich, dass noch eine Mehrheit der redundant arbeitenden Recheninstanzen fehlerfrei läuft, da hierdurch die Betriebssicherheit des technischen Prozesses noch gegeben ist.

Die Mehrheit der redundant arbeitenden Recheninstanzen können auch genutzt werden, um die besagte Zustandskopie anzufertigen. Hierbei ist sichergestellt, dass diese Zustandskopie fehlerfrei ist, was durch die übereinstimmenden Ergebnisse der Mehrheit der Recheninstanzen mit genügend hoher Wahrscheinlichkeit abgesichert ist. Nach Übertragung der Zustandskopie auf die sich in Quarantäne befindende Recheninstanz kann diese die "verpassten" Rechenschritte unter Ausnutzung der gespeicherten Nachrichten nachholen, bis diese wieder synchron läuft und dann in den technischen Prozess reintegriert werden. Nun stehen wieder genügend redundante Recheninstanzen zur Verfügung, um im nächsten Fehlerfall wieder die falsch rechnende Recheninstanz vom Prozess auszuschließen. Anderenfalls würden nacheinander immer mehr Recheninstanzen ausfallen, bis der technische Prozess zum Erliegen käme. Somit trägt die Erfindung zu einer Steigerung der Stabilität des technischen Prozesses bei, ohne dass die Sicherheit (Safety) darunter leidet.

Beschrieben wird gemäß einem weiteren Aspekt der Erfindung Computerprogrammprodukt mit Programmbefehlen zur Durchführung des Verfahrens nach einem der Ansprüche 1 - 11.

Gemäß der Erfindung wird somit ein Programmmodule enthaltendes Computerprogramm mit Programmbefehlen beschrieben, wobei mittels des Computerprogramms jeweils das erfindungsgemäße Verfahren und/oder dessen Ausführungsbeispiele ausführbar sind und mit der Ausführung die beschriebenen Vorteile erreicht werden.

Beschrieben wird gemäß einem weiteren Aspekt der Erfindung Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

Darüber hinaus wird also eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und/oder bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmdatensätzen als Datei, insbesondere als Downloaddatei, oder als Datenstrom, insbesondere als Downloaddatenstrom, des Computerprogramms. Das Computerprogramm wird beispielsweise unter Verwendung der Bereitstellungsvorrichtung in eine Rechenumgebung übertragen, sodass das erfindungsgemäße Verfahren in einer Recheninstanz dieser Rechenumgebung zur Ausführung gebracht werden kann.

Rechnergestützt oder computerimplementiert ist eine Vorrichtung, wenn diese mindestens einen Computer oder Prozessor aufweisen, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Komponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Die IT-Infrastruktur kann auch aus einem Netzwerk der genannten Komponenten bestehen.

Eine Cloud (auch als Rechnerwolke oder Datenwolke bezeichnet) ist eine Rechenumgebung für ein sog. Cloudcomputing. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

In jedem Falle erfüllen die erfindungsgemäß vorgestellten Merkmalen die Aufgabe, eine verteilte Abarbeitung von Applikationsprogrammen auf verteilten Recheninstanzen kommerzieller Herkunft (sog. COTS-Komponenten, COTS steht für Commercial off-the-shelf) sicher zu gestalten. Die Bindung an örtliche Gegebenheiten sowie proprietäre Computersysteme wird dadurch vorteilhaft vermindert oder sogar aufgehoben. Eine Prozessstabilität kann vorteilhaft systemunabhängig gewährleistet werden.

Recheninstanzen (oder kurz Instanzen) bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder analoge elektrische Größen. Die erforderlichen Anweisungen sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten, insbesondere Prozessoren, und/oder Softwarekomponenten, insbesondere Programmmodule über Schnittstellen.

Allgemeine Ausführungsbeispiele der Erfindung Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass
h) in dem Fall, dass eine Mehrheit von Ergebnissen identischen Inhalts bei dem Voting nicht festgestellt werden kann, die Vielzahl N der Ergebnisse bei dem Durchführen des technischen Prozesses unberücksichtigt bleibt,
i) für den Fall gemäß h) die Vielzahl N von Recheninstanzen von der Durchführung des technischen Prozesses ausgeschlossen wird,
j) Die Vielzahl N von Recheninstanzen neu initialisiert wird, wobei die redundante Ausführung von Applikationsprogrammen neu gestartet wird.

Diese Variante der Erfindung beschreibt den Fall, dass in einem Team alle Recheninstanzen oder zumindest die Mehrheit der Recheninstanzen unterschiedliche Ergebnisse liefern. In diesem Fall besteht keine Möglichkeit, eine Zustandskopie zu erstellen, bei der mit genügender Sicherheit davon ausgegangen werden kann, dass diese fehlerfrei ist. Anstelle dessen werden alle Recheninstanzen des Teams neu initialisiert. Eine Synchronisation kann daher nicht erfolgen, denn es gibt keine Recheninstanzen, die während der neuen Initialisierung weiterlaufen und eine Referenz zur Synchronisierung bilden könnten. Anstelle dessen werden nach der neuen Initialisierung, die ein Vorliegen von Fehlern bei den Applikationsprogrammen oder bei den bearbeiteten Datensätzen mit der erforderlichen Sicherheit ausschließt, die Recheninstanzen dem technischen Prozess für die Abarbeitung neuer Aufgaben in Form von der Durchführung von Applikationsprogrammen zur Verfügung gestellt.

Diese Variante der Erfindung hat den Vorteil, dass der Prozess auch dann weitergeführt werden kann, wenn ein ganzes Team von Recheninstanzen ausfällt. Dies setzt selbstverständlich voraus, dass mehrere Teams von Recheninstanzen vorhanden sind, die während der neuen Initialisierung des betroffenen Teams den Prozess durch Abarbeiten der erforderlichen Applikationsprogramme sozusagen "vertretungsweise" sicherstellen können. In dieser Zeit kann höchstens eine Verlangsamung der Abarbeitung auftreten, jedoch kommt der Prozess nicht vollständig zum Erliegen. Außerdem kann vorteilhaft auch genügend Rechenkapazität durch die Teams zur Verfügung gestellt werden, dass der technische Prozess bei Ausfall eines Teams nicht verlangsamt wird, sondern die Recheninstanzen bei Verfügbarkeit aller Teams nicht unter Volllast laufen. Im Ergebnis wird vorteilhaft die Performance des Prozesses hinsichtlich der Laufstabilität und Verfügbarkeit verbessert.

Gemäß einer Variante sind die oben erklärten Aspekte der Erfindung dadurch bestimmt, dass
die Zustandskopie von einer von der neuen Initialisierung nicht betroffenen Recheninstanz erst erstellt wird, sobald der Fall gemäß c) eintritt.

Bei der von der neuen Initialisierung nicht betroffenen Recheninstanz handelt es sich um eine Recheninstanz, die Teil einer Mehrheit von Recheninstanzen ist, die identische Ergebnisse liefern. Demgegenüber sind Betroffene Recheninstanzen immer diejenigen, die aufgrund der Erzeugung eines abweichenden Ergebnisses (welches eine Minderheit darstellt) von der Beteiligung an dem technischen Prozess ausgeschlossen wurden.

Die Nutzung von Zustandskopien, die von einer von der neuen Initialisierung nicht betroffenen Recheninstanz erstellt wird, hat den Vorteil, dass diese nach Bedarf erstellt werden können. Der Bedarf entsteht immer erst dann, wenn eine Recheninstanz aufgrund eines abweichenden Ergebnisses von der Durchführung des technischen Prozesses ausgeschlossen wird. Solange eine Mehrheit der Recheninstanzen identische Ergebnisse liefert, ist davon auszugehen, dass von diesen Recheninstanzen eine fehlerfreie Zustandskopie erstellt werden kann. Da dies nur bei Bedarf geschieht, und erst dann die nachfolgenden Nachrichten und deren Reihenfolge abgespeichert werden muss, wird vorteilhaft die erforderliche Rechenkapazität auf ein Minimum reduziert. Im Ergebnis steigt hierdurch die Performanz bei der Durchführung des technischen Prozesses mit Blick auf die Rechenkapazität.

Alternativ könnte die Zustandskopie zyklisch von jeder Recheninstanz erstellt werden. Jedes Mal, wenn eine neue Zustandskopie erstellt wird, wird die vorhergehende inklusive der anschließend gespeicherten Nachrichten gelöscht. Fällt eine Recheninstanz aus, so besteht bereits eine Zustandskopie, auf die zurückgegriffen werden kann. Diese Variante hat den Vorteil, dass ein Einfluss der Recheninstanzen aufeinander durch Übernehmen einer Zustandskopie einer anderen Recheninstanz vermieden wird. Außerdem kann bei Ausfall einer Recheninstanz sofort mit der neuen Initialisierung begonnen werden, ohne auf die Erstellung einer Zustandskopie warten zu müssen. Im Ergebnis steigt hierdurch die Performanz bei der Durchführung des technischen Prozesses mit Blick auf die Geschwindigkeit der neuen Initialisierung.

Gemäß einer Variante sind die oben erklärten Aspekte der Erfindung dadurch bestimmt, dass
der Inhalt der Ergebnisse der Mehrheit von Recheninstanzen von mindestens einem vorhergehenden Vergleichsschritt, vorzugsweise mindestens 10 vorhergehenden Vergleichsschritten, gespeichert werden und beim Bearbeiten gemäß Schritt f) von Anspruch 1 der Nachrichten berechnete Ergebnisse in mindestens einem dieser Bearbeitung nachgelagerten Vergleichsschritt zum Synchronisieren mit mindestens einem der genannten gespeicherten Ergebnisse verglichen wird.

Der Vergleichsschritt zum Synchronisieren wird vorzugsweise durch denselben Voter durchgeführt, wie der Vergleich der Ergebnisse gemäß dem Schritt b) des erfindungsgemäßen Verfahrens. Die Speicherung der Ergebnisse der vorhergehenden Vergleichsschritte ermöglicht es vorteilhaft, dass eine Synchronisation der Recheninstanzen sowohl im Normalbetrieb im Schritt b) als auch bei der Wiedereingliederung einer von einem Fehler betroffenen Recheninstanz im Schritt f) erleichtert wird. Ein erfolgreicher Vergleich durch den Voter ist dann auch möglich, wenn die zu vergleichenden Ergebnisse zeitlich im Rahmen der gespeicherten Ergebnisse auseinanderfallen. In diesem Zusammenhang soll im Folgenden von einem Synchronisationsfenster die Rede sein, in dem eine Synchronisation auch bei einem gewissen zeitlichen Versatz der Erzeugung der zu vergleichenden Ergebnisse gelingt. Im Falle einer Wiedereingliederung einer betroffenen Recheninstanz kann diese dadurch vorteilhaft früher erfolgen, da diese die nicht betroffenen Recheninstanzen sozusagen nicht vollständig einholen muss, um wieder eingegliedert zu werden.

Der Vorteil dieser Variante liegt darin, dass der Prozess stabiler läuft, da eine Synchronisation der Erzeugung der Ergebnisse durch die Applikationsprogramme lediglich innerhalb des durch die gespeicherten Ergebnisse definierten Synchronisationsaktionsfensters liegen müssen. Eine Wiedereingliederung einer betroffenen Recheninstanzen erfolgt dadurch nach kürzerer Synchronisationszeit.

Gemäß einer Variante sind die oben erklärten Aspekte der Erfindung dadurch bestimmt, dass die (von der Erzeugung der Minderheit von Ergebnissen) betroffene mindestens eine Recheninstanz wieder in den technischen Prozess eingegliedert wird, wenn in mindestens einem nachgelagerten Vergleichsschritt, vorzugsweise in mindesten drei aufeinanderfolgenden, in der Reihenfolge der gespeicherten Ergebnisse durchgeführten nachträglichen Vergleichsschritten eine Übereinstimmung des jeweiligen gespeicherten Ergebnisses mit dem zugehörigen berechneten Ergebnis festgestellt wird.

Als nachgelagerte Vergleichsschritte werden im Rahmen dieser Erfindung diejenigen Vergleichsschritte bezeichnet, welche für die Wiedereingliederung einer betroffenen Recheninstanz gemäß Schritt f) erforderlich sind. Diese unterscheiden sich inhaltlich nicht von den Vergleichsschritten, die im Rahmen des Schrittes b) des erfindungsgemäßen Verfahrens durchgeführt werden. Diese sind nur insofern nachgelagert, als durch die neue Initialisierung der betroffenen Recheninstanz ein Zeitversatz entsteht. Dieser kann anschließend durch nachträgliches Abarbeiten derjenigen Arbeitsschritte des auf der betroffenen Recheninstanz installierten Anwendungsprogramme aufgeholt werden, welche durch die nicht betroffenen Recheninstanzen bereits vorher abgearbeitet wurden. Hierzu werden ausgehend von der Zustandskopie in der betroffenen Recheninstanz die gespeicherten Nachrichten in der gespeicherten Reihenfolge abgearbeitet, bis die betroffene Recheninstanz hinsichtlich der zu vergleichenden Ergebnisse das Synchronisationsfenster wieder erreicht hat.

Um die erfolgreiche Synchronisation festzustellen, d. h., dass die betroffene Recheninstanz bei der nachträglichen Bearbeitung der Nachrichten keinen Fehler gemacht hat, ist mindestens die Übereinstimmung mit einem gespeicherten Ergebnis erforderlich. Vorteilhaft kann aber mit der Wiedereingliederung auch gewartet werden, bis drei aufeinanderfolgende Ergebnisse übereinstimmen, was die Sicherheit hinsichtlich der Aussage erhöht, dass die Betroffene Recheninstanz fehlerfrei synchron arbeitet. Dies steigert vorteilhaft die Performanz des Systems mit Blick auf die Sicherheit (Safety).

Gemäß einer Variante sind die oben erklärten Aspekte der Erfindung dadurch bestimmt, dass die Reihenfolge der Nachrichten unter Berücksichtigung des Zeitpunktes des Sendens der Nachrichten bestimmt wird, wobei die Reihenfolge der zeitlichen Abfolge des Sendens entspricht.

Die Reihenfolge der Nachrichten beschreibt in diesem Falle einen Determinismus, der es ermöglicht, voneinander abhängige Arbeitsschritte, also sich bedingende Arbeitsschritte, mit den gleichen Ergebnissen (wie die nicht betroffenen Recheninstanzen) abzuarbeiten. Dies ist erforderlich, um bei sich bedingenden Arbeitsschritten Zwischenergebnisse aus vorhergehenden Arbeitsschritten als Nachrichten an nachfolgende Arbeitsschritte zu senden bzw. für die Abarbeitung von Arbeitsschritten erforderliche Nachrichten zu empfangen.

Diese Variante der Erfindung hat somit den Vorteil, dass nicht nur parallele Arbeitsschritte, die auf einer Recheninstanz unabhängig voneinander laufen, sondern auch sequenzielle Arbeitsschritte, die in einer bestimmten zeitlichen Reihenfolge durchgeführt werden müssen, mit dem Schritt F des erfindungsgemäßen Verfahrens nacharbeiten zu können.

Gemäß einer Variante sind die oben erklärten Aspekte der Erfindung dadurch bestimmt, dass
der Zeitpunkt des Sendens der Nachrichten als digitaler Zeitstempel abgespeichert wird.

Ist für den Zeitpunkt des Sendens der Nachrichten ein digitaler Zeitstempel verfügbar, so kann die Reihenfolge der Nachrichten jederzeit zuverlässig durch Analyse des digitalen Zeitstempels bestimmt werden. Insbesondere ist es vorteilhaft, wenn der digitale Zeitstempel einen Teil der Nachricht bildet, sodass dieser der betreffenden Nachricht eindeutig zugeordnet werden kann. Außerdem kann durch Lesen der Nachricht auf diese Weise jederzeit der Sendezeitpunkt ermittelt werden, sodass eine Vielzahl von Nachrichten in ihrer zeitlichen Reihenfolge geordnet werden können.

Gemäß einer Variante sind die oben erklärten Aspekte der Erfindung dadurch bestimmt, dass
die Zustandskopie und die Nachrichten über einen Nachrichtenbroker versendet und empfangen werden.

Nachrichten Broker übernehmen vorteilhaft die Organisation eines Versendens und Empfangens von Nachrichten, die die betreffenden technischen Prozesse sowie auch die oben erläuterten Prozesse des Wiedereingliederns von ausgeschlossenen Recheninstanzen betreffen.

Gemäß einer Variante sind die oben erklärten Aspekte der Erfindung dadurch bestimmt, dass der Nachrichtenbroker mit einem Publish-Subscribe-Verfahren arbeitet. Es kommt also ein Publish-Subscribe-System zum Einsatz.

Dabei umfasst das Publish-Subscribe-System zumindest eine zum Veröffentlichen von Nachrichten eingerichtete sendeseitige Einrichtung, zumindest einen sendeseitigen Nachrichtenbroker, zumindest einen empfangsseitigen Nachrichtenbroker sowie zumindest eine zum Empfang von Nachrichten eingerichtete empfangsseitige Anwendung.

Entsprechende Publish-Subscribe-Systeme sind als solche aus anderen Anwendungsgebieten bekannt und ermöglichen allgemein die Entkopplung eines Informationsanbieters von einem Informationsempfänger. Dabei werden sendeseitige Anwendungen (d.h. auf Recheninstanzen laufende Applikationsprogramme) häufig auch als "Veröffentlicher" oder "Publisher" bezeichnet und empfangsseitige Anwendungen als "Subskribenten", "Subscriber" oder "Abonnenten".

Die Realisierung beziehungsweise Verwendung eines Publish-Subscribe-Systems zur Folge, dass sendeseitige und empfangsseitige Anwendungen einander nicht kennen müssen. Dies führt insbesondere dazu, dass für den Fall, dass eine weitere empfangsseitige Anwendung Nachrichten beziehungsweise Daten von der sendeseitigen Anwendung empfangen möchte, die sendeseitige Anwendung nicht geändert werden muss, um die Nachrichten zusätzlich auch noch an die weitere empfangsseitige Anwendung zu übertragen.

Für das erfindungsgemäße Verfahren bedeutet dies, dass Recheninstanzen, die von dem technischen Prozess ausgeschlossen werden, problemlos durch andere Recheninstanzen ersetzt werden können, bis diese wieder in das Verfahren eingegliedert werden können. Dabei wird der Wechsel der Aufgaben von Recheninstanzen durch entsprechendes Abonnieren der erforderlichen Nachrichten sichergestellt. Genauso können wieder eingegliederte Recheninstanzen ihr Abonnement aktualisieren, um wieder die aktuellen Nachrichten zu bekommen. Auch für den Prozess der Synchronisierung vor der Wiedereingliederung können die betreffenden älteren Nachrichten in der erforderlichen Reihenfolge abgerufen werden.

Gemäß einer Variante sind die oben erklärten Aspekte der Erfindung dadurch bestimmt, dass
k) die Nachrichten in Datenabschnitte enthaltenden Applikationsdatensätzen enthalten sind,
l) das Voting mit mehrfach identisch geänderten redundanten Datenabschnitten als Ergebnissen (des redundanten Ausführens der Applikationsprogramme) durchgeführt wird,
m) für den Fall gemäß c) von Anspruch 1 die Applikationsdatensätze, die für eine Fehleridentifizierung ursächliche Datenabschnitte enthalten (d. h. eine Minderheit von Ergebnissen bildet, die von der Mehrheit der Ergebnisse abweicht), bei dem Durchführen des technischen Prozesses unberücksichtigt bleiben.

Es ist vorteilhaft, die Nachrichten in einzelnen Datenabschnitten von Applikationsdatensätzen abzuspeichern. Hierdurch ist eine gezielte Adressierung beispielsweise der Arbeitsergebnisse der redundanten Anwendung eines Applikationsprogramms möglich, um diese in der oben beschriebenen Weise in einem Voter einem Vergleich zu unterziehen. Aber auch andere Datenabschnitte in den Applikationsdatensätzen können vorteilhaft dem Vergleich unterzogen werden, da diese ebenfalls Rückschluss auf ein zuverlässiges Funktionieren des technischen Prozesses liefern (hierzu im Folgenden noch mehr).

Gemäß einer Variante sind die oben erklärten Aspekte der Erfindung dadurch bestimmt, dass eine Speichereinheit der Recheninstanzen derart betrieben wird, dass
n) Applikationsdatensätze in der Speichereinheit abgelegt werden und vor dem Ablegen codiert werden,
o) Applikationsdatensätze aus der Speichereinheit abgerufen werden und nach dem Abrufen decodiert werden, wobei die Speichereinheit auf Fehler überwacht wird, indem eine zeitliche Abfolge von rechnergestützten Prüfläufen für die Speichereinheit durchgeführt wird, und wobei die neue Initialisierung der betroffenen Recheninstanz gemäß Schritt
f) von Anspruch 1 erst begonnen wird, wenn mindestens ein, vorzugsweise zwei aufeinanderfolgende Prüfläufe ergeben, dass keine Fehler vorliegen.

Der Durchlauf eines Prüflaufes ist die Mindestvoraussetzung dafür, dass jeder Applikationsdatensatz wenigstens einmal geprüft wurde bevor mit der erneuten Initialisierung der Betroffenen Recheninstanz begonnen wird. Noch sicherer ist es, wenn zwei aufeinanderfolgende Prüfläufe abgewartet werden, weil davon ausgegangen werden muss, dass zu dem Zeitpunkt, zu dem eine Recheninstanz ausfällt, ein Prüflauf gerade im Gange ist. Da es fehleranfällig ist, in diesem Stadium festzustellen, welche Applikationsdatensätze bereits geprüft wurden und deswegen im nächsten Prüflauf geprüft werden müssten, bevor die Fehlerfreiheit aller Applikationsdatensätze festgestellt werden kann, ist es einfacher das positive Ergebnis dieses Prüflaufes abzuwarten und noch einen weiteren vollständigen Prüflaufes durchzuführen. Wenn dieser ebenfalls ein positives Ergebnis erzeugt, ist sicher, dass jeder Applikationsdaten Satz mindestens einmal (teilweise zweimal) geprüft wurde, ohne dass im Einzelnen geprüft werden muss, welche Applikationsdaten Sätze im vorhergehenden Prüflauf zum Zeitpunkt des Ausfalls der Recheninstanz noch nicht geprüft worden waren.

Allgemein kann mit dem Verfahren zum Betreiben der Speichereinheit sowie zum Ausführen von Applikationsprogrammen durch Überprüfung des Datenabschnittes, enthaltend Daten für die Applikationsprogramme, sowie des Prüfdatenabschnitts, enthaltend weitere Kriterien, die eine Überprüfung erleichtern, festgestellt werden, welche Datensätze tatsächlich oder zumindest potenziell korrupt sind und daher die Betriebssicherheit bei der Ausführung der Applikationsprogramme, insbesondere der Nutzprogramme, gefährden. Die betroffenen Datensätze werden durch Ausgabe eines Fehlers gekennzeichnet und vorzugsweise im weiteren Verlauf von einer Datenverarbeitung ausgeschlossen.

Bei dieser Variante wird mit anderen Worten die Betriebssicherheit sozusagen an die Datensätze selbst gekoppelt. Zu diesem Zweck sind diese erfindungsgemäß mit geeigneten Prüfdatenabschnitten versehen. Dies ermöglicht es vorteilhaft, dass die Datensätze auf ein und derselben Speichereinheit abgelegt werden können, auch wenn Prozesse aus Gründen der Betriebssicherheit parallel (redundant) ablaufen. Insbesondere können dadurch zur Speicherung der Datensätze sowie zum Abarbeiten der Applikationsprogramme kommerziell erhältliche Software- und Hardwarekomponenten, sogenannte COTS-Komponenten zum Einsatz kommen, ohne dass hierbei die Anforderungen an die Betriebssicherheit gefährdet werden. Derartige Komponenten können daher beispielsweise auch bei Applikationen der Bahntechnik zur Anwendung kommen und proprietäre System ablösen. Vorteilhaft sind COTS-Komponenten kostengünstig in der Anschaffung und können auch bei Bedarf einfacher ausgetauscht werden und in Cloudlösungen integriert werden.

Gemäß einer Variante sind die oben erklärten Aspekte der Erfindung dadurch bestimmt,
dass in dem Fall, dass ein Fehler in einem der Prüfläufe festgestellt wird, das Verfahren ab Schritt e) (unabhängig vom Eintreten des Falls c) von Anspruch 1 durchgeführt wird.

Es ist von Vorteil, wenn auch die Fehler in den Applikationsdatensätzen korrigiert werden, sobald diese auffallen. Diese können nämlich potenziell auch zu Fehlern bei der Bearbeitung der Applikationsdatensätze (insbesondere derjenigen der Applikationsprogramme) führen, was ein Sicherheitsrisiko für den Betrieb des technischen Prozesses darstellt. Der Prozess einer neuen Initialisierung wirkt jedoch auch auf die gespeicherten Applikationsdatensätze, die bei der Erstellung der Zustandskopie aus einer intakten (nicht betroffenen) Recheninstanz von dieser kopiert werden.

Gemäß einer Variante sind die oben erklärten Aspekte der Erfindung dadurch bestimmt,
dass zum erstmaligen Codieren (COD) der Daten p) mindestens ein Applikationsdatensatz (ADS), enthaltend Datenabschnitte mit Applikationsdaten für mindestens eines der Applikationsprogramme und Prüfdatenabschnitte (PA) erzeugt oder ausgewählt wird,
q) für jeden Applikationsdatensatz (ADS) der Prüfdatenabschnitt (PA) mit Zähldaten (ZD), die den sich in der Durchführung befindenden Prüflauf kennzeichnen, belegt werden,
r) jeder Applikationsdatensatz (ADS) codiert und abgelegt wird,
und dass zum Prüfen der Daten in dem sich in der Durchführung befindenden Prüflauf nach dem Abrufen und Decodieren (DEC) der Applikationsdatensätze (ADS) jeweils
s) für einen Applikationsdatensatz (ADS) ein Fehler festgestellt wird, wenn die Zähldaten (ZD) weder den sich in der Durchführung befindenden Prüflauf noch den jüngsten vollständig durchgeführten Prüflauf kennzeichnen,
t) der Prüfdatenabschnitt (PA) des betreffenden Applikationsdatenabschnitts mit Zähldaten (ZD), die den sich in der Durchführung befindenden Prüflauf kennzeichnen, belegt werden, wenn kein Fehler festgestellt wurde,
u) der betreffende Applikationsdatensatz (ADS) wieder codiert und abgelegt wird, wenn kein Fehler festgestellt wurde.

Dadurch, dass jedem der Datenabschnitte beim erstmaligen Codieren ein Prüfdatenabschnitt (der vorher erzeugt wurde, wenn es noch keinen Prüfdatenabschnitt gab, oder ausgewählt wurde, wenn für den betreffenden Datenabschnitt schon ein Prüfdatenabschnitt zur Verfügung stand) zugeordnet wird, können in dem betreffenden Datensatz Zähldaten abgespeichert werden, die Information über den in Ausführung befindlichen Prüflauf beinhalten. Durch die anschließende Codierung des betreffenden Datensatzes werden die Zähldaten sowie auch die anderen Daten des betreffenden Datenabschnittes bis zum Decodieren vor einem Zugriff geschützt. Die Daten können im codierten Zustand nämlich nicht versehentlich (beispielsweise durch eine Fehlfunktion) oder willentlich (zum Beispiel durch einen externen Angriff) geändert werden, ohne dass eine Änderung beim Decodieren der Daten als Fehler erkannt wird. Zumindest ist es extrem unwahrscheinlich, dass die Änderung bei Decodierung der Datensatzes nicht als Fehler auffällt. Insofern gibt es zwar keinen Schutz vor Änderungen an sich, sondern nur vor unentdeckten Änderungen. Durch die zyklische Prüfung des Speicherinhaltes auf korrekte Kodierung (unter Anwendung der Zähldaten) werden auch sog. schlafende Fehler entdeckt. Hiermit sind Fehler gemeint, die während der Speicherung der Daten zum Beispiel durch physikalische Änderungen des Speichermediums (Bitkipper usw.) auftreten können. Die geringe Wahrscheinlichkeit, Fehler nicht zu entdecken, macht gemäß dieser Variante die Einhaltung höherer Sicherheitslevel (SEL-1 ... SIL-4) möglich.

Es werden in dem Datensatz vorzugsweise alle Daten geschützt, die das Applikationsprogramm benötigt, d.h. sowohl die Daten, die das Programm an sich ausmachen, als auch die Daten, die zu verarbeitende Informationen darstellen.

Zum Beispiel ist es möglich, dass aufgrund von Speicherfehlern, d. h. Fehlern, die während der Speicherung der Daten auf einer Speichereinheit auftreten (beispielsweise sogenannte Bit-Kipper) oder aufgrund von Verarbeitungsfehlern, d. h. Fehlern, die während der Bearbeitung des Datensatzes auftreten, die Zähldaten verändert werden. Eine solche Veränderung wird dann jedoch beim Durchlaufen des nächsten Prüflaufes festgestellt, wenn die Zähldaten weder den sich in der Durchführung befindenden Prüflauf noch den jüngsten vollständig durchgeführten Prüflauf kennzeichnen. In einem solchen Fall wird ein Fehler festgestellt. Auch wenn dessen Ursache vielleicht nicht eindeutig festgestellt werden kann und eventuell unschädlich für eine Datenverarbeitung wäre, wird aus Gründen des zu erreichenden Sicherheitsniveaus nach Feststellung des Fehlers dieser beispielsweise ausgegeben und/oder es werden Maßnahmen getroffen, die eine weitere Bearbeitung der fehlerhaften Daten unterbinden.

Auch diese Fehler fallen bei einem Voting auf, sodass die Betroffene Recheninstanz entsprechend dem oben beschriebenen Verfahren ausgeschlossen wird. Danach wird der Prozess einer erneuten Initialisierung durchlaufen bei dem bei dieser beschriebenen Variante auch ein Prüflaufes oder sogar zwei aufeinanderfolgende Prüfläufe abgewartet werden, bevor die Initialisierung startet. Dadurch werden vorteilhaft auch zuverlässig aufgetretene Speicherfehler korrigiert. Hierfür stehen die redundant gespeicherten Datensätze anderer Recheninstanzen zur Verfügung.

Immer, wenn in einem Prüflauf kein Fehler festgestellt wird, werden die Zähldaten in dem Prüfdatenabschnitt mit den Zähldaten des in Durchführung befindlichen Prüflaufes belegt, der Datensatz codiert und wieder abgelegt. Hierdurch wird der betreffende Datensatz gleichzeitig als im betreffenden Prüflauf geprüft gekennzeichnet.

Zähldaten müssen die Eigenschaft aufweisen, dass diese eine Reihe bilden, bei denen jeweils der Vorgänger und der Nachfolger jedes Elementes der Menge der Zähldaten bekannt ist. Hierbei können grundsätzlich alle mathematischen Reihen zum Einsatz kommen. Besonders bevorzugt kann die Menge der natürlichen Zahlen ausgewählt werden.

Um den Prüflauf durchzuführen, wird vorzugsweise ein Applikationsprogramm (Dienstprogramm) genutzt, welches den Prüflauf durchführt. Zu diesem Zweck greift das betreffende Applikationsprogramm, welches auch als Prüfprogramm bezeichnet werden kann, auf die Speichereinheit zu, decodiert, prüft und codiert Datensatz für Datensatz, bis ein Prüflauf vollständig durchgeführt wurde. Für den Fall, dass ein Fehler festgestellt wird, kann dieser durch das Prüfprogramm ausgegeben werden. Dabei kann das Prüfprogramm auch Funktionen enthalten, die eine Reaktion auf einen festgestellten Fehler enthalten, beispielsweise das Aussetzen der Durchführung eines Applikationsprogramms (Nutzprogramms) auf der betroffenen Recheninstanz, welche die fehlerhaften Datenabschnitte der Applikation (auch Applikationsdatenabschnitte genannt) verwendet und daher potenziell sicherheitsrelevante Fehler machen könnte. Hierdurch werden vorteilhaft zusätzliche Fehlerquellen erkennbar gemacht, auch wenn diese nicht direkt mit der redundanten Verarbeitung der Daten selbst zu tun haben.

Die Durchführung des Prüflaufes kann beispielsweise über die Adressierung der einzelnen Datensätze gesteuert werden. Sind die Adressen aller Datensätze am Anfang des Prüflaufs bekannt, können die Datensätze sequenziell aufgerufen werden, bis der Prüflauf beendet ist (hierzu im Folgenden noch mehr).

Wird ein Prüflauf als ganzer fehlerhaft durchgeführt, dahingehend, dass dieser nicht alle Datensätze eines Prüflaufes prüft, so fällt dies spätestens beim nächsten Prüflauf auf, zumindest vorausgesetzt, dass die nicht geprüften Datensätze im folgenden Prüflauf wieder geprüft werden. Diese weisen dann nämlich noch die Zähldaten des vorletzten Prüflaufes auf, was während des folgenden Prüflaufes auffällt. Hierdurch wird ein Fehler erkannt und ausgegeben. Die Zähldaten ermöglichen daher auch ein Monitoring der ordnungsgemäßen Durchführung der Prüfläufe selbst. Damit wird eine weitere Fehlerquelle erkennbar gemacht. Daten, die als veraltet und damit potenziell fehlerhaft (weil nicht regelmäßig in einem Prüflauf überprüft) eingestuft werden, sind hinsichtlich ihrer Integrität nicht sicher genug, weswegen dies als Fehler gewertet wird.

Hiermit wird ein zusätzlicher Sicherheitsmechanismus geschaffen, der einen Betrieb der Speichereinheit sowie das Ausführen von Applikationsprogrammen (hierbei handelt es sich um Dienstprogramme oder Nutzprogramme, hierzu im Folgenden noch mehr) erhöht. Von dieser Erhöhung profitieren vorteilhaft insbesondere sicherheitsrelevante Anwendungen, beispielsweise Bahn-Anwendungen, die als Zulassungsvoraussetzung bestimmte Sicherheitsniveaus (auch Sicherheitslevel, SIL-1 **...** SIL-4 oder Safety Integrity Level genannt) genügen müssen. Der Begriff "Sicherheit" ist im Rahmen dieser Erfindung wie erwähnt im Sinne von Betriebssicherheit (Safety) zu verstehen. Insbesondere erfolgt die Codierung in erster Linie nach Gesichtspunkten der Betriebssicherheit und nicht nach Gesichtspunkten der Übertragungssicherheit (Security). Bei dieser Variante der Erfindung ist daher vorzugsweise ein Codierungsverfahren vorgesehen, welches beim Codieren sowie Decodieren eine hohe Performance erreicht (mit dem Effekt kurzer Codierungs- und Decodierungszeiten) und nicht einen hohen Schwierigkeitsgrad garantiert, eine Codierung ohne Autorisierung zu entschlüsseln.

Des Weiteren wird gemäß einem weiteren Aspekt der Erfindung ein Programmmodule enthaltendes Computerprogramm mit Programmbefehlen zur Durchführung des genannten erfindungsgemäßen Verfahrens und/oder dessen Ausführungsbeispielen beschrieben, wobei mittels des Computerprogramms jeweils das erfindungsgemäße Verfahren und/oder dessen Ausführungsbeispiele durchführbar sind.

Darüber hinaus wird gemäß einem weiteren Aspekt der Erfindung eine Bereitstellungsvorrichtung zum Speichern und/oder Bereitstellen des Computerprogramms beschrieben. Die Bereitstellungsvorrichtung ist beispielsweise ein Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogramm vorzugsweise in Form eines Datenstroms speichert und/oder bereitstellt.

Die Bereitstellung erfolgt in Form eines Programmdatensätzen als Datei, insbesondere als Downloaddatei, oder als Datenstrom, insbesondere als Downloaddatenstrom, des Computerprogramms. Diese Bereitstellung kann beispielsweise auch als partieller Download erfolgen, der aus mehreren Teilen besteht. Ein solches Computerprogramm wird beispielsweise unter Verwendung der Bereitstellungsvorrichtung in eine Rechenumgebung übertragen, sodass das erfindungsgemäße Verfahren in eine Recheninstanz zur Ausführung gebracht werden kann.

Exemplarische Ausführungsbeispiele der Zeichnung Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

Figur 1 zeigt eine Bahnanwendung mit einer Rechenumgebung mit ihren Wirkzusammenhängen schematisch, wobei ein Ausführungsbeispiel des erfindungsgemäßen Verfahrens mit der Rechenumgebung ausgeführt werden kann,
Figur 2 (bestehend aus den Teilfiguren 2A und 2B, verteilt auf zwei Seiten) zeigt ein Ausführungsbeispiel des erfindungsgemäßen Verfahrens anhand einer Rechenumgebung in der Bahnanwendung gemäß Figur 1 mit zwei Hostrechnern als Blockschaltbild, wobei die einzelnen Funktionseinheiten Programmmodule enthalten, die Applikationsprogramme ergeben und jeweils in einem oder mehreren Prozessoren ablaufen können und die Schnittstellen demgemäß softwaretechnisch oder hardwaretechnisch ausgeführt sein können,

Figur 3 und 4 zeigt Ausführungsbeispiele des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2beispielhaft angedeutet sind.

Figur 5 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

Unabhängig vom grammatikalischen Geschlecht betreffender Begriffe sind Personen mit männlicher, weiblicher oder anderer Geschlechtsidentität gleichermaßen umfasst.

### Detaillierte Beschreibung der Zeichnung

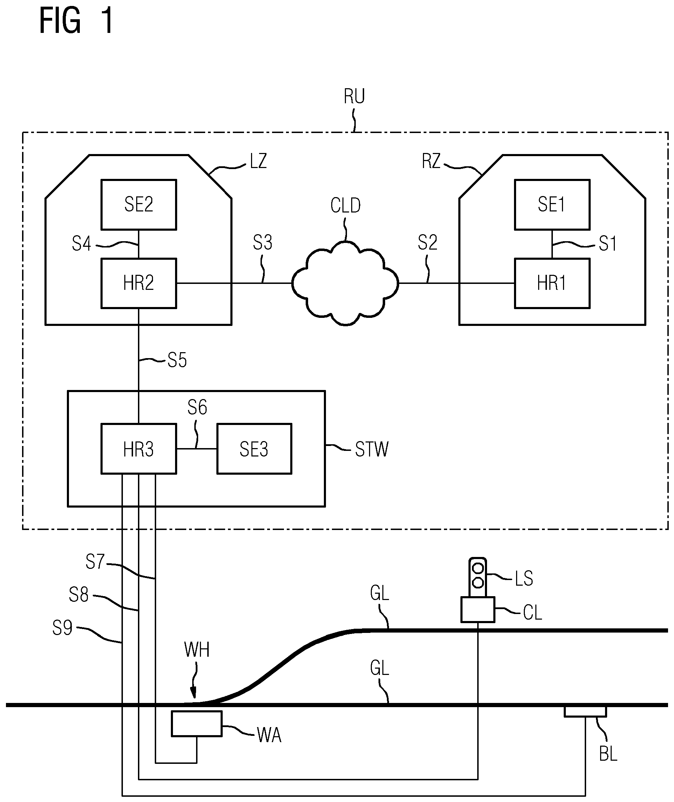

In Figur 1 ist schematisch eine Bahnanwendung dargestellt, welche durch eine Rechenumgebung RU gesteuert wird. Die Bahnanwendung weist Gleise GL auf, an denen verschiedene Komponenten der Stellwerkstechnik STW exemplarisch dargestellt sind. Hierbei handelt es sich um einen Weichenantrieb WA, der eine Weiche WH stellen kann. Weiterhin ist eine Balise BL in einem der Gleise GL verbaut, mit deren Hilfe Informationen mit die Balise BL überfahrenden Zügen ausgetauscht werden können. Zuletzt ist ein Lichtsignal LS dargestellt, welches durch einen Controller CL gesteuert wird.

Die Rechnerumgebung RU kann verschiedene Hostrechner, nämlich einen erster Hostrechner HR1, einen zweiten Hostrechner HR2 und einen dritten Hostrechner HR3 aufweisen, auf die Applikationen zum Steuern der Bahnanwendung in Form von Applikationsprogrammen AP1 ... AP5 (hierzu im Folgenden noch mehr) verteilt sind. Der erste Hostrechner HR1 wird durch ein Rechenzentrum RZ zur Verfügung gestellt und ist über eine erste Schnittstelle S1 mit einer ersten Speichereinheit SE1 verbunden. Das Rechenzentrum RZ kann beispielsweise durch einen Dienstleister des Bahnbetreibers oder durch den Bahnbetreiber selbst betrieben werden. Über eine zweite Schnittstelle S2 ist der erste Hostrechner HR1 mit einer privaten Cloud CLD verbunden, sodass dieser örtlich nicht an die Bahnanwendung gebunden ist. Bei der Cloud CLD kann es sich um eine private Cloud CLD handeln, wobei darunter eine Cloud CLD zu verstehen ist, bei der der Zugriff auf autorisierte Nutzer beschränkt ist.

Eine Leitzentrale LZ des Bahnbetreibers beherbergt den zweiten Hostrechner HR2, der über eine dritte Schnittstelle S3 ebenfalls mit der Cloud CLD verbunden ist. Außerdem ist der zweite Hostrechner HR2 über eine vierte Schnittstelle S4 mit einer zweiten Speichereinheit SE2 verbunden.

Die Rechnerumgebung RU weist außerdem exemplarisch ein Stellwerk STW auf, welches den dritten Hostrechner HR3 beherbergt, der über eine sechste Schnittstelle S6 mit einer dritten Speichereinheit SE3 verbunden ist. Außerdem weist der dritte Hostrechner HR3 eine fünfte Schnittstelle S5 zum zweiten Hostrechner HR2 auf. In nicht dargestellter Weise könnte der dritte Hostrechner HR3 auch mit der Cloud CLD verbunden sein. Der dritte Hostrechner HR3 weist außerdem eine siebte Schnittstelle S7 zum Weichenantrieb WA, eine achte Schnittstelle S8 zu dem Controller CL und eine neunte Schnittstelle S9 zu der Balise BL auf.

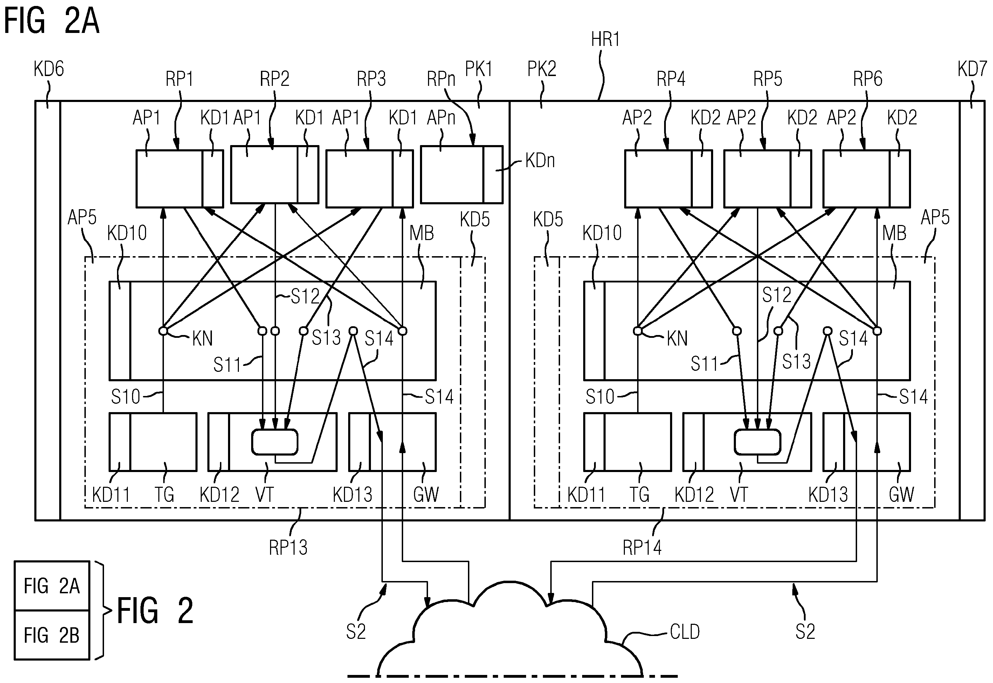

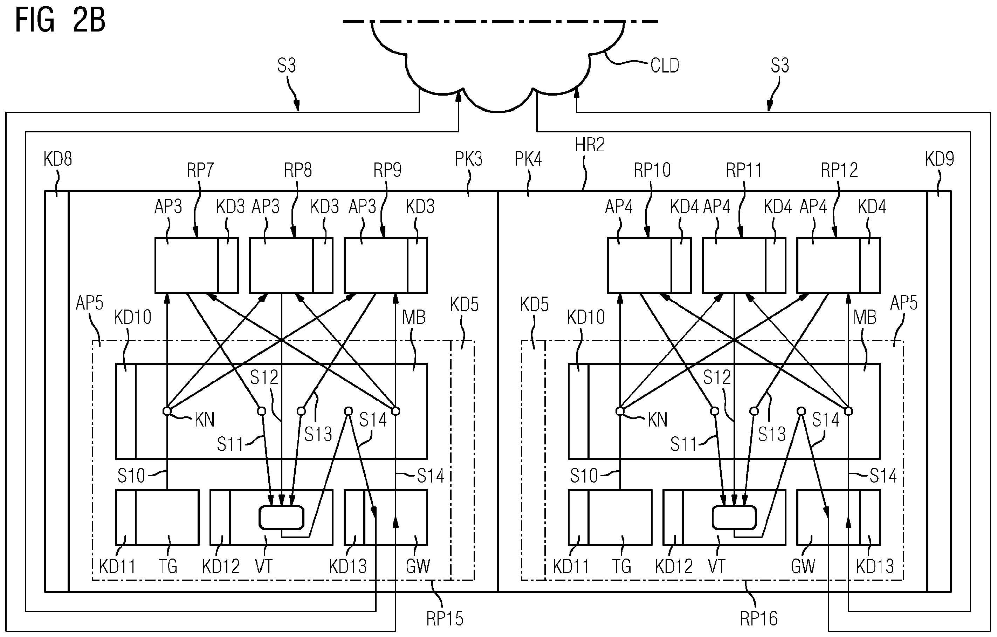

Alle Schnittstellen S1 ... S9 gemäß Figur 1 sind grundsätzlich kabelgebunden oder auch durch eine kabellose Übertragungstechnik, beispielsweise Funk, realisierbar. Die Anordnung der Hostrechner HR1 ... HR3 ist lediglich exemplarisch und kann bei komplexeren Bahnanlagen beliebig erweitert werden. Eine Rechenumgebung wird dadurch definiert, dass die beteiligten Hostrechner HR1 ... HR3 untereinander kommunizieren können und dadurch die Applikationen unter Berücksichtigung verfügbarer Rechenkapazitäten verteilt auf den Hostrechner HR1 ... HR3 abgearbeitet werden können. Hierzu werden nicht näher dargestellte Recheninstanzen gebildet, die im Folgenden noch näher beschrieben werden (vergleiche Figur 2 wo die Recheninstanzen RP1 ... RPn dargestellt sind).

Figur 2 stellt die Konfiguration des ersten Hostrechners HR1 und des zweiten Hostrechners HR2 gemäß Figur 1 exemplarisch dar. Die Einbindung weiterer Hostrechner kann analog erfolgen. Die Hostrechner sind so organisiert, dass zur Bewältigung bestimmte Aufgabenkomplexe in Form von Programmkomplexen PK1 ... PK4 auf den Hostrechnern organisiert werden, welche aus einzelnen Applikationsprogrammen AP1 ... AP5 bestehen. Ein erstes Applikationsprogramm AP1, ein zweites Applikationsprogramm AP2 ein drittes Applikationsprogramm AP3 und ein viertes Applikationsprogramm AP4 sind für die Abarbeitung von Bahnapplikationen, wie in Figur 1 dargestellt, vorgesehen und sind somit Nutzprogramme.

Programmkomplexe PK1 ... PK4 fassen allgemein eine Anzahl von Applikationsprogrammen AP1 ... AP5 zusammen, deren gemeinsame Abarbeitung mit Blick auf die Gesamtheit von Applikationen zusammengefasst werden kann. Insbesondere kann vorgesehen werden, dass alle in einem Datensatz enthaltenen Applikationsprogramme AP1 ... AP5 zu einem Programmkomplex zusammengefasst werden. Dabei wird dem Umstand Rechnung getragen, dass der Datensatz hinsichtlich der zur Anwendung kommenden Daten eine Zusammenfassung von Datenabschnitten DA bewirkt, während parallel hierzu ein Programmkomplex die entsprechenden Applikationsprogramme AP1 ... AP5, denen die Datenabschnitte DA zugeordnet sind, zusammenfasst.

Als Konfigurationsdaten KD1 ... KD13 sollen Daten verstanden werden, welche Applikationsprogramme AP1 ... AP5 für die individuellen Anforderungen des vorliegenden Anwendungsfalls konfigurieren. Die Konfiguration definiert das Zusammenspiel verschiedener Applikationsprogramme AP1 ... AP5 untereinander sowie die Funktion der Applikationsprogramme AP1 ... AP5 auf den Hardwarekomponenten, auf denen diese installiert sind. Außerdem enthält die Konfiguration Anpassungen auf den vorliegenden Anwendungsfall, für welchen das betreffende Applikationsprogramm gedacht ist (beispielsweise Parameter, die sich in verschiedenen Anwendungsfällen unterscheiden können).

Anhand eines fünften Applikationsprogramms AP5 ist außerdem gezeigt, dass dieses durch einzelne Teilprogramme TG, VT, GW, MB realisiert werden kann. Die Teilprogramme TG, VT, GW, MB des fünften Applikationsprogramms AP5 sind ein Gateway GW, ein Voter VT, ein Taktgeber TG und ein Message Broker MB (hierzu im Folgenden noch mehr). Dies ist aber nur als Beispiel zu verstehen, wie der erfindungsgemäß zum Einsatz kommende Voter VT softwaretechnisch realisiert und in eine funktionale Umgebung eingebunden werden kann. Alternativ könnte zum Beispiel der Taktgeber TG in einer anderen (nicht sicheren) Applikation laufen, während die restlichen Teilprogramme TG, VT, GW, MB wie beschrieben in dem (sicheren) fünften Applikationsprogramm AP5 laufen.

Als Teilprogramme TG, VT, GW, MB im Sinne der Erfindung sind allgemein kleinere Einheiten wie Programmmodule zu verstehen, deren Gesamtheit das Applikationsprogramm ergeben. Somit ist es vorteilhaft möglich, Applikationsprogramme AP1 ... AP5 modular aufzubauen, **d. h.** beispielsweise Programmmodule vorzusehen, die in mehreren Applikationsprogrammen AP1 ... AP5 zum Einsatz kommen. Dabei können die Teilprogramme TG, VT, GW, MB abhängig von ihrem Einsatz mit unterschiedlichen Konfigurationsdaten KD1 ... KD13 konfiguriert werden. Teilprogramme TG, VT, GW, MB machen es somit möglich, Applikationsprogramme AP1 ... AP5 einfacher erstellen zu können und damit die Rechenumgebung einfacher an einen Anwendungsfall anpassen zu können.

Im Zusammenhang mit der Erstellung von Programmkomplexen PK1 ... PK4, Applikationsprogrammen AP1 ... AP5 und Teilprogrammen TG, VT, GW, MB soll angemerkt werden, dass jeweils den Programmkomplexen PK1 ... PK4, den Applikationsprogrammen AP1 ... AP5 sowie den Teilprogrammen TG, VT, GW, MB jeweils Konfigurationsdaten KD1 ... KD13 zugeordnet werden können. Hierbei kann es zu einer mehrfachen Abspeicherung von bestimmten Daten desselben Inhalts kommen, wobei diese jeweils Datenabschnitte DA ergeben, die wiederum eindeutig einem Programmkomplex, Applikationsprogrammen AP1 ... AP5 oder Teilprogrammen TG, VT, GW, MB zugeordnet werden können. Wichtig ist hierbei die Möglichkeit einer eindeutigen Zuordnung, um zur Verwirklichung von Prüffunktionen insbesondere der Speichereinheiten eindeutig adressierbare Datenabschnitte DA zur Verfügung zu haben (siehe hierzu die im Folgenden beschriebenen Diversitätskenndaten DD1 ... DD4).

Das fünfte Applikationsprogramm AP5 ist in allen Programmkomplexen PK1 ... PK4 gleich organisiert. Über den Gateway GW können Nachrichten mit der privaten Cloud CLD ausgetauscht werden. Daher bildet der Gateway GW die zweite Schnittstelle S2 und die dritte Schnittstelle gemäß Figur 1 aus. Über den Message Broker MB werden die Nachrichten innerhalb des Programmkomplexes verteilt, vorzugsweise nach dem Publish-Subscribe-Verfahren. Der Gateway GW nutzt beispielsweise eine fünfzehnte Schnittstelle S15, um empfangene Nachrichten redundanten Recheninstanzen RP1 ... RPn über den Message Broker MB zur Verfügung zu stellen. Diese werden dann durch die redundanten Recheninstanzen RP1 ... RPn abgerufen. Dies ist durch Knoten KN angedeutet, welche in der fünfzehnte Schnittstelle S15 (und ebenfalls in den weiteren, im Folgenden noch beschriebenen Schnittstellen S10 ... S14) angedeutet sind.

In Figur 2 sind der Übersichtlichkeit halber die Programmkomplexe PK1 ... PK4 jeweils vollständig in einem Hostrechner HR1 ... HR2 realisiert. In der Realität können Programmkomplexe PK1 ... PK4 mit ihren Applikationsprogrammen AP1 ... AP5 und deren Teilprogrammen TG, VT, GW, MB auch auf mehreren Hostrechnern verteilt ablaufen (nicht dargestellt). Dies ermöglicht es vorteilhaft, Kapazitäten von Hostrechnern zu nutzen, wenn diese für die Konfiguration eines ganzen Programmkomplexes nicht ausreichend Kapazität zur Verfügung stellen, indem die Kapazität von mehreren Hostrechnern für den betreffenden Programmkomplex gemeinsam genutzt wird.

Die Programmkomplexe PK1 ... PK4 können beispielsweise für einen bestimmten Aufgabenkomplex vorgesehen werden. Beispielsweise kann ein Programmkomplex zur Ansteuerung einer bestimmten Bahnkomponente (Lichtsignal LS, Stellwerk STW, Weiche WH, Balise BL, Achszähler usw.) Verwendung finden. Für die Ansteuerung dieser Bahnkomponente sind im Allgemeinen mehrere Applikationsprogramme AP1 ... AP5 erforderlich. Insbesondere wird auch das bereits vorstehend erläuterte fünfte Applikationsprogramm AP5 benötigt, um eine sichere Ausführung der Applikation sowie Kommunikation mit anderen Programmkomplexen PK1 ... PK4 oder Hostrechnern zu gewährleisten. Dieses ist als Dienstprogramm zu bezeichnen, welches einer Sicherung der Funktion des Hostrechners dient und damit eine den Hostrechner betreffende Applikation ausführt (im Gegensatz zu den Nutzdaten für Bahnkomponenten verarbeitenden Applikationsprogrammen AP1 ... AP5 die somit als Nutzprogramme bezeichnet werden). Das fünfte Applikationsprogramm AP5 läuft ebenfalls in mindestens einer Recheninstanz RP9... RP12 pro Hostrechner, jedoch vorzugsweise nicht redundant.

Als eine Vielzahl redundanter Recheninstanzen im Sinne der Erfindung wird eine Softwareimplementierung auf den Hostrechnern HR1 ... HR3 verstanden, die eine parallele, sprich gleichzeitige Abarbeitung von Applikationsprogrammen AP1 ... AP5, vorzugsweise innerhalb des jeweiligen Programmkomplexes erlauben. In Figur 2 dargestellt sind Programmkomplexe PK1 ... PK4 mit je drei redundanten Recheninstanzen (beispielsweise RP1, RP2 und RP3), um ein redundantes 2oo3-System zu bilden, es sind aber auch mehr redundante Recheninstanzen RP1 ... RPn, wie exemplarisch für den ersten Programmkomplex PK1 dargestellt, denkbar. Im Folgenden wird das Verfahren zur Abarbeitung der Applikationsprogramme AP1 ... AP5 anhand des ersten der Programmkomplexe PK1 ... PK4 für die erste redundante Recheninstanz RP1, die zweite redundante Recheninstanz RP2 ... und die dritte redundante Recheninstanz RP3 zur Abarbeitung des ersten Applikationsprogramms AP1 erläutert. Für die Programmkomplexe PK1 ... PK4 läuft die Abarbeitung aber entsprechend ab, sodass diese nicht gesondert erläutert werden muss.

In der ersten redundante Recheninstanz RP1 bis dritten redundanten Recheninstanz RP3 wird das erste Applikationsprogramm AP1 redundant, also zeitgleich parallel, abgearbeitet. Hierbei handelt es sich um ein Applikationsprogramm, welches eine Aufgabe für die Bahnanwendung gemäß Figur 1 übernimmt. Von der ersten redundanten Recheninstanz RP1, bis zur dritten redundanten Recheninstanz RP2 stehen überdies erste Konfigurationsdaten KD1 zur Verfügung, welche zur Ausführung des ersten Applikationsprogramms AP1 zur Abarbeitung der individuellen Aufgabe der Bahnanwendung erforderlich sind. Beispielsweise kann das erste Applikationsprogramm AP1 allgemein zur Ansteuerung von Lichtsignalen LS dienen, wobei die ersten Konfigurationsdaten KD1 die Anwendung des ersten Applikationsprogramms AP1 auf das Lichtsignal LS gemäß Figur 1 gewährleisten. Hierbei muss beispielsweise eine Kommunikation mit dem Controller CL gemäß Figur 1 sichergestellt werden.

Konfigurationsdaten KD1 ... KD13 stehen auch für alle anderen Programmkomplexe PK1 ... PK4, Applikationsprogramme AP1 ... AP5 sowie Teilprogramme TG, VT, GW, MB zur Verfügung. Entsprechend enthalten die Konfigurationsdaten KD1 ... KD13 die jeweils für die Programmkomplexe PK1 ... PK4, Applikationsprogramme AP1 ... AP5 und Teilprogramme TG, VT, GW, MB erforderlichen Daten, damit diese die ihnen zugewiesenen Aufgaben im betreffenden Anwendungsfall übernehmen können. Dabei sind die Konfigurationsdaten KD1 ... KD13 jeweils unveränderlich und können daher in einem Datenabschnitt DA mit bekanntem Anfang und bekanntem Ende abgespeichert werden. Ebenso werden alle Programmkomplexe PK1 ... PK4, Applikationsprogramme AP1 ... AP5 sowie Teilprogramme TG, VT, GW, MB als Datenabschnitte DA mit bekanntem Anfang und bekanntem Ende abgespeichert. Hierfür stehen beispielsweise die erste Speichereinheit SE1, die zweite Speichereinheit SE2 sowie die dritte Speichereinheit SE3 gemäß Figur 1 zur Verfügung. Daten, die in einer der genannten Speichereinheiten abgelegt werden oder über einen gewissen Zeitraum in einer der genannten Speichereinheiten gespeichert bleiben, werden aber regelmäßigen Prüfläufen unterzogen, durch die Speicherfehler in den abgespeicherten Daten erkannt werden können (hierzu im Folgenden noch mehr). Als Speicherfehler werden Fehler verstanden, die in den Daten beim Ablegen oder beim Abrufen der Daten auftreten oder entstehen, während die Daten in der Speichereinheit gespeichert werden.

Daten, die sich während der Abarbeitung von Programmen verändern, werden zwischen den beteiligten Partnern als Nachrichten ausgetauscht. Hierfür steht, wie bereits erwähnt, der Message Broker MB zur Verfügung. Außerdem kommunizieren die einzelnen Hostrechner HR1, HR2 über die externen Schnittstellen S2, S3 beispielsweise mittels der privaten Cloud CLD untereinander, damit Daten auch zwischen verschiedenen Programmkomplexen PK1 ... PK4 verschiedener Hostrechner ausgetauscht werden können. Nach Änderung der Daten werden diese wieder in der ersten Speichereinheit SE1, der zweiten Speichereinheit SE2 oder der dritten Speichereinheit SE3 abgelegt. Auch bei der Verarbeitung der Daten können Fehler in den Daten auftreten, die im Rahmen dieser Erfindung genauer als Verarbeitungsfehler bezeichnet werden.

Die Abläufe in der Bahnanwendung gemäß Figur 1 sind sicherheitsrelevant für die Betriebssicherheit der Bahnanwendung. Dies ist der Grund, warum das erste Applikationsprogramm AP1 in der ersten redundanten Recheninstanz RP1 bis zur der dritten redundanten Recheninstanz RP3 zeitlich parallel, d. h. redundant, abgearbeitet wird. Die erste redundante Recheninstanz RP1, die zweite redundante Recheninstanz RP2 und die dritte Recheninstanz RP3 senden das Ergebnis bei der Abarbeitung des ersten Applikationsprogramms AP1 an den Message Broker MB, und zwar die erste redundante Recheninstanz RP1 über eine elfte Schnittstelle S11 und die zweite redundante Recheninstanz über eine zwölfte Schnittstelle S12 und die dritte redundante Recheninstanz über eine dreizehnte Schnittstelle S13. Diese Ergebnisse werden über die genannten Schnittstellen von dem Voter VT abgerufen, der ein Voting VTG durchführt. Nur, wenn die Mehrheit der Ergebnisse übereinstimmt (d.h. bei drei redundanten Recheninstanzen in dem 2003-System mindestens zwei Ergebnisse, bei vier redundanten Recheninstanzen mindestens drei Ergebnisse, ... bei n redundanten Recheninstanzen mindestens n/2+1 bei geraden und n/2+0,5 bei ungeraden n), wird das Ergebnis über eine vierzehnte Schnittstelle S14 dem Message Broker MB zur Verfügung gestellt und kann von dem Gateway GW über die vierzehnte Schnittstelle S14 zur Übertragung an andere Einheiten über die zweite Schnittstelle S2 abgerufen werden.

Damit die Berechnungsergebnisse für das Voting VTG durch den Voter VT gleichzeitig zur Verfügung stehen, werden die Prozesse in der ersten redundanten Recheninstanz RP1 und in der zweiten redundanten Recheninstanz RP2 und der dritten redundanten Recheninstanz RP3 über den Taktgeber TG getaktet. Dieser stellt Taktsignale über eine zehnte Schnittstelle S10 zur Verfügung, die ebenfalls über den Message Broker MB von der ersten redundanten Recheninstanz RP1 und der zweiten redundanten Recheninstanz RP2 abgerufen werden können.

Die geschilderte Art der Abarbeitung von Aufgaben durch das erste Applikationsprogramm AP1 wird durch das fünfte Applikationsprogramm AP5 sichergestellt. Bei dem fünften Applikationsprogramm AP5 handelt es sich also um ein internes Applikationsprogramm, welches die Funktionsweise der Hostrechner HR1 ... HR3 unterstützt und damit ein Dienstprogramm ist. Dies macht deutlich, dass Applikationsprogramme AP1 ... AP5 nicht nur für die Applikation der Bahnanwendung gemäß Figur 1 (Nutzprogramme), sondern auch für die Abarbeitung von Applikationen für die Hostrechner HR1 ... HR3 (Dienstprogramme) zur Verfügung gestellt werden müssen.

Die Zusammenfassung von Applikationsprogrammen AP1 ... AP5 zu Programmkomplexen PK1 ... PK4 sowie die Unterteilung von Applikationsprogrammen AP1 ... AP5 in Teilprogramme TG, VT, GW, MB erleichtert hierbei die Zusammenstellung von Applikationsprogrammen AP1 ... AP5 sowie die Prüfung der Abarbeitung der Aufgaben auf Fehlerfreiheit. Zu diesem Zweck werden Daten zu Datenabschnitten DA zusammengefasst, die jeweils als solche eindeutig identifiziert und adressiert werden können (durch Definition eines Anfangs des Datenabschnitts DA sowie eines Endes des Datenabschnitts DA). In Datenabschnitten DA werden, wie bereits erwähnt, Teilprogramme TG, VT, GW, MB, Applikationsprogramme AP1 ... AP5, Programmkomplexe PK1 ... PK4 sowie die jeweils zugehörigen Konfigurationsdaten KD1 ... KD13 abgelegt (wobei diese gewöhnlich aus einer Vielzahl von Datenabschnitten DA bestehen).

Vorteilhaft kann zusätzlich zur bereits beschriebenen Redundanz bei der Bearbeitung auch eine Redundanz bei der Speicherung der Daten vorgesehen werden. Hierbei werden die erforderlichen Daten vorzugsweise unter Einsatz von sog. Diversitätskenndaten DD1 ... DD4 zur Kennzeichnung der jeweils redundanten Speicherung mehrfach abgespeichert, sodass die Datenabschnitte DA und Konfigurationsdateien jeweils eindeutig zugeordnet werden können. Mit anderen Worten kommt es in diesem Fall nicht vor, dass unterschiedliche Applikationsprogramme AP1 ... AP5, wenn diese identische Konfigurationsdaten KD1 **...** KD13 verwenden, auf denselben Speicherort für diese Daten zugreifen, sondern immer auf den jeweils ihnen zugeordneten Datenabschnitt DA, in dem die Daten verfügbar sind. Wie bereit beschrieben, werden die Daten überdies vorzugsweise auch codiert gespeichert.

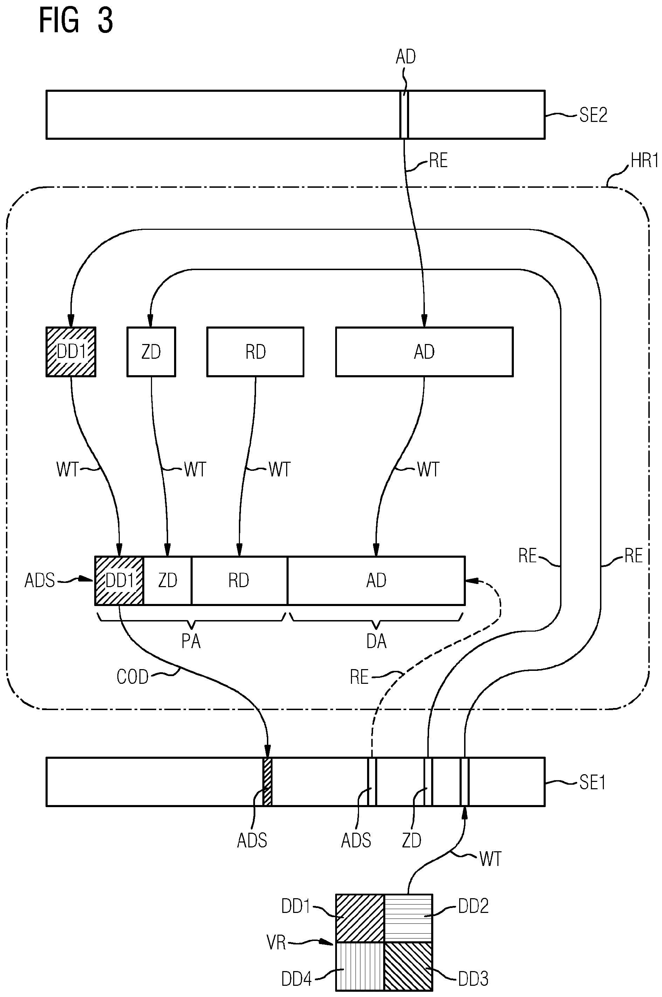

In Figur 3 ist der Verfahrensschritt eines erstmaligen Codierens von Daten schematisch beim Durchführen des technischen Prozesses dargestellt. In dem technischen Prozess werden wiederholt neue Daten generiert (Arbeitsergebnisse) welche jeweils vor dem Abspeichern werden sollen. Dargestellt ist dies für eine Rechenumgebung, beispielhaft bestehend aus dem ersten Hostrechner HR1, der ersten Speichereinheit SE1 sowie der zweiten Speichereinheiten SE2. Im Prinzip kann durch den ersten Hostrechner HR1 auf Daten zugegriffen werden, die in der ersten Speichereinheit SE1 und in der zweiten Speichereinheit SE2 abgespeichert sind. Dabei kann ein Lesen (RE) sowie ein Schreiben (WT) erfolgen, was durch entsprechende Pfeile angedeutet ist.

In den Speichereinheiten SE1, SE2 können beispielsweise Applikationsdaten AD für Applikationen AP1 ... AP5 (vgl. Figur 2) für das Durchführen von Applikationsprogrammen AP1 ... AP5 gespeichert sein. Weiterhin ist es möglich, Zähldaten ZD sowie einen Vorrat VR von Diversitätskenndaten DD1 ... DD4 (also erste Diversitätskenndaten DD1, zweite Diversitätskenndaten DD2, dritte Diversitätskenndaten DD3 und vierte Diversitätskenndaten DD4) zu speichern. Um die Applikationsdaten AD für Applikationen im Sinne der Erfindung zu nutzen, d. h. ein Verfahren zum rechnergestützten Ausführen eines Applikationsprogramms zur Durchführung des technischen Prozesses in der erfindungsgemäßen Weise durchzuführen, müssen die Applikationsdaten AD in Form von Applikationsdatensätzen ADS abgespeichert werden, die mittels des Verfahrens gemäß Figur 3 erstellt und nach einem Codiervorgang COD codiert abgelegt werden.

In Figur 3 ist lediglich exemplarisch dargestellt, wie die Applikationsdaten AD, die Zähldaten ZD sowie die Diversitätskenndaten DD1 ... DD4 einzelne Speicherbereiche der ersten Speichereinheit SE1 und der zweiten Speichereinheit SE2 belegen. Im Prinzip ist beliebig, wo die entsprechenden Daten abgelegt sind, diese werden durch eine geeignete Adressierung aufgefunden und es gibt keine Beschränkungen, welcher Applikationsdatensatz ADS wo in den Speichereinheiten SE1, SE2 abgespeichert wird.

Weiterhin ist die Diversität der Diversitätskenndaten DD1 ... DD4 durch Schraffuren angedeutet, was deutlich machen soll, dass Applikationsdatensätze ADS durch die Diversitätskenndaten DD1 ... DD4 aus dem Vorrat VR gekennzeichnet werden können. Zur Verfügung stehen, wie am Vorrat VR gezeigt, eine Längsschraffur, eine Querschraffur und zwei Schrägschraffuren, welche im Winkel von 90° zueinanderstehen. Der in Figur 3 im Einzelnen dargestellte Applikationsdatensatz ADS weist beispielsweise die Schraffur auf, die auf die ersten Diversitätskenndaten DD1 hinweist.

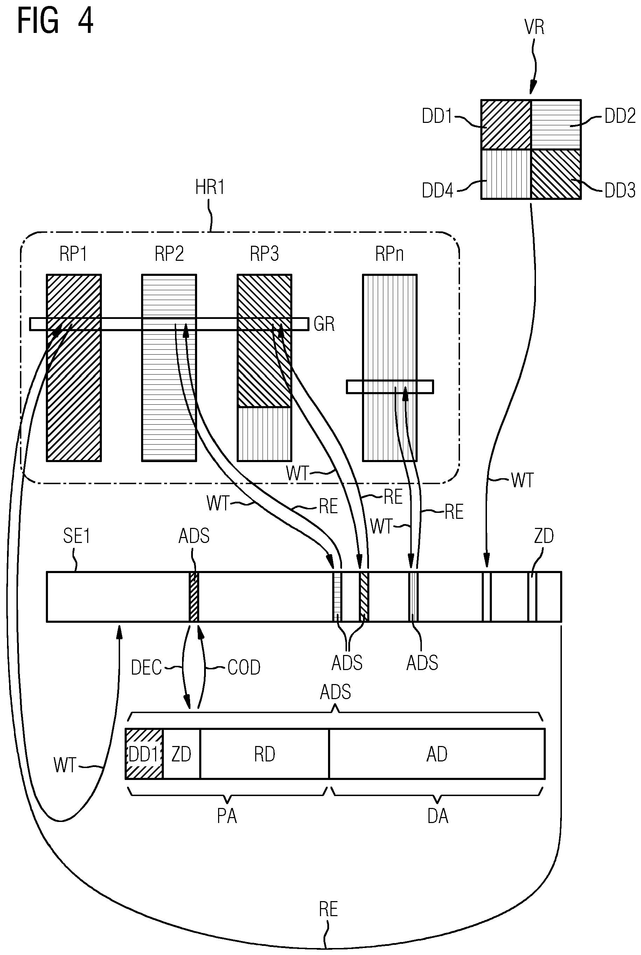

Wie der vergrößert dargestellte Applikationsdatensatz ADS zeigt, besteht dieser aus einem Datenabschnitt DA für die Applikationsdaten AD sowie einem Prüfdatenabschnitt PA, der die ersten Diversitätskenndaten DD1, ein Zählelement in den Zähldaten ZD sowie Redundanzdaten RD aufweist. Die ersten Diversitätskenndaten DD1, die Zähldaten ZD, die Redundanzdaten RD, die mit einem Startwert befüllt sind, sowie die Applikationsdaten AD werden im ersten Hostrechner HR1 beispielsweise in einem Schreibvorgang WT in einem nicht dargestellten Arbeitsspeicher zu dem Applikationsdatensatz ADS zusammengefasst und so gespeichert. Anschließend wird der Applikationsdatensatz ADS in einem Codiervorgang COD codiert und in die erste Speichereinheit SE1 übertragen, wobei die Diversität aufgrund der ersten Diversitätskenndaten DD1 auch in der ersten Speichereinheit SE1 durch die genannte Schraffur angedeutet ist. Dort steht der Applikationsdatensatz ADS für einen weiteren Abruf (siehe Figur 4) zur Verfügung.

In Figur 4 ist die Verwendung des Applikationsdatensatzes ADS gemäß Figur 3 und weitere Applikationsdatensätze ADS mit den zweiten Diversitätskenndaten DD2 und den dritten Diversitätskenndaten DD3 schematisch dargestellt. Die drei dargestellten Applikationsdatensätze ADS sollen identische Applikationsdaten AD enthalten, um die erfindungsgemäße parallele Bearbeitung in einer Gruppe GR von Recheninstanzen RP1, RP2, RP3 mit dem anschließenden Voting VTG zu ermöglichen (diese bilden ein 2oo3 System). Der Prüfdatenabschnitt PA ist in jedem Fall mit den jeweils unterschiedlichen Diversitätskenndaten DD1 ... DD4 belegt. Auch die Zähldaten ZD sowie die Redundanzdaten RD können voneinander abweichen.

Die Applikationsdatensätze ADS werden in den drei Recheninstanzen RP1, RP2, RP3 ausgeführt. Zu diesem Zweck werden die Applikationsdatensätze ADS in einem Lesevorgang RE jeweils in die Recheninstanz eingelesen. Dabei ist den Recheninstanzen RP1, RP2, RP3 jeweils eine bestimmte Diversität zugeordnet, was durch eine Schraffur entsprechend dargestellt ist. Diese Schraffur entspricht jeweils denjenigen der Diversitätskenndaten DD1 ... DD4 des Vorrats VR.

Zu erkennen ist auch, dass eine Recheninstanz RPn auch Daten zweier Diversitäten, im vorliegenden Fall die mit den dritten Diversitätskenndaten DD3 und den vierten Diversitätskenndaten DD4 gekennzeichneten Applikationsdatensätze ADS verarbeiten kann. Hierdurch kann eine optimale Ausnutzung der durch die Recheninstanz RPN zur Verfügung stehenden Rechenkapazität erreicht werden.

Die Recheninstanzen RP1, RP2, RP3 lesen jeweils die Applikationsdatensätze ADS der richtigen Diversität aus. Dies wird erreicht durch Dienstprogramme, die im Hintergrund laufen, sodass die Recheninstanzen RP1, RP2, RP3 automatisch die richtigen Applikationsdatensätze ADS adressieren. Dies ist für den Applikationsdatensatz ADS gemäß Figur 3 mit den ersten Diversitätskenndaten DD1 näher dargestellt und soll im Folgenden genauer erläutert werden.

Wird dieser Applikationsdatensatz ADS abgerufen, wird dieser zunächst in einem Decodiervorgang DEC decodiert, um anschließend gelesen zu werden (RE). Durch die Decodierung können die ersten Diversitätskenndaten DD1, die aktuellen Zähldaten ZD sowie die Redundanzdaten RD zusammen mit den Applikationsdaten AD gelesen werden und Dienstprogramme angewendet werden, welche eventuell aufgetretene Speicherfehler erkennen. Es kann geprüft werden, ob die ersten Diversitätskenndaten DD1 dem Vorrat VR entstammen und/oder mit der Diversität der ersten Recheninstanz RP1 übereinstimmen. Anhand der Zähldaten ZD kann der ordnungsgemäße Verlauf von Prüfläufen überprüft werden, da diese den im Ablauf befindlichen Prüflauf oder den vorher erfolgten Prüflauf kennzeichnen müssen. Nur, wenn die Prüfung ergibt, dass die Daten keine Speicherfehler aufweisen, werden diese für ein Lesen (RE) freigegeben und von der ersten Recheninstanz RP1 verarbeitet. Dies gilt sowohl für die in Figur 4 dargestellte parallele Bearbeitung des Applikationsdatensatzes ADS durch Applikationsprogramme AP1 ... AP5 in den Recheninstanzen RP1, RP2, RP3 (Regelbetrieb eines 3oo2-Systems) als auch für die neue Initialisierung der Recheninstanz RPn (Reparaturbetrieb), die parallel zum Regelbetrieb durchgeführt wird (hierzu im Folgenden mehr).

Die erste Recheninstanz RP1 schreibt nach Bearbeitung des Applikationsdatensatzes ADS diesen zurück in die erste Speichereinheit SE1. Auch hier kann eine Überprüfung des Prüfdatenabschnitts PA, der ersten Diversitätskenndaten DD1, der Zähldaten ZD sowie der Redundanzdaten RD durchgeführt werden, um eventuelle Verarbeitungsfehler bei der Verarbeitung des Applikationsdatensatzes ADS zu identifizieren (wobei ein entdeckter Fehler zu einem Ausschluss der betroffenen Recheninstanz und deren neuer Initialisierung führt, und die restlichen Recheninstanzen ein 2oo2-System bilden). Außerdem werden die Zähldaten ZD mit demjenigen Zählelement gleichgesetzt, welches den aktuell ablaufenden Prüflauf kennzeichnen. Anschließend wird der Applikationsdatensatz ADS codiert (COD) und in die erste Speichereinheit SE1 geschrieben (WT).

Dieses Verfahren wird, wenn auch nicht im Einzelnen dargestellt, ebenfalls für die weiteren Applikationsdatensätze ADS in den Recheninstanzen RP2, RP3 (Regelbetrieb) und bei der nachgeholten Bearbeitung der in Form von Applikationsdatensätzen ADS gespeicherten Nachrichten in der gespeicherten Reihenfolge auch durch die Recheninstanz RPn (Reparaturbetrieb) durchgeführt. Nach erfolgreicher Bearbeitung der Applikationsdatensätze ADS wird für die Applikationsdatensätze ADS zusätzlich ein Voting VTG durchgeführt, um festzustellen, dass die Applikationsdatensätze ADS durch das Bearbeiten durch die Recheninstanzen RP1, RP2, RP3 identisch geändert wurden. Ist das nicht der Fall, weist dies auf einen Verarbeitungsfehler im Regelbetrieb hin. Bei drei (oder vier) Recheninstanzen können die Applikationsdaten AD, die mehrheitlich identisch sind, für eine weitere Verarbeitung herangezogen werden, während die Applikationsdaten AD, die sich von diesen unterscheiden, für eine Weiterverarbeitung gesperrt werden. Wenn nur noch zwei Recheninstanzen im Regelbetrieb als 2oo2-System für das Voting VTG zur Verfügung stehen, muss der Regelbetrieb bei Auftreten eines weiteren Fehlers in einer der beiden Recheninstanzen eingestellt werden. Alle Recheninstanzen RP1, RP2, RP3, RP4 müssen dann initialisiert werden. Allerdings wird dann keine Zustandskopie erstellt, und keine Nachrichten gespeichert, weil alle Recheninstanzen von der Durchführung des technischen Prozesses im Regelbetrieb ausgeschlossen wurden.

Die Bearbeitung von als Applikationsdatensätze ADS gespeicherten Nachrichten im Reparaturbetrieb erfolgt parallel zur Bearbeitung der Applikationsdatensätze ADS, wie oben beschrieben, der Recheninstanzen RP1, RP2, RP3. Daher kann der aktuell geänderte Applikationsdatensatz ADS der Recheninstanz RPn bei dem genannten Voting VTG ebenfalls berücksichtigt werden. Sobald eine Übereinstimmung der geänderten Applikationsdatensätze ADS aller Recheninstanzen RP1, RP2, RP3, RPn innerhalb des oben bereits erläuterten Synchronisationsfensters festgestellt wird, kann die Recheninstanz RPn wieder in den Regelbetrieb zur Durchführung des technischen Prozesses eingegliedert werden, sodass diese parallel zu den Recheninstanzen RP1, RP2, RP3 arbeitet (diese bilden gemeinsam dann ein 3oo4-System).

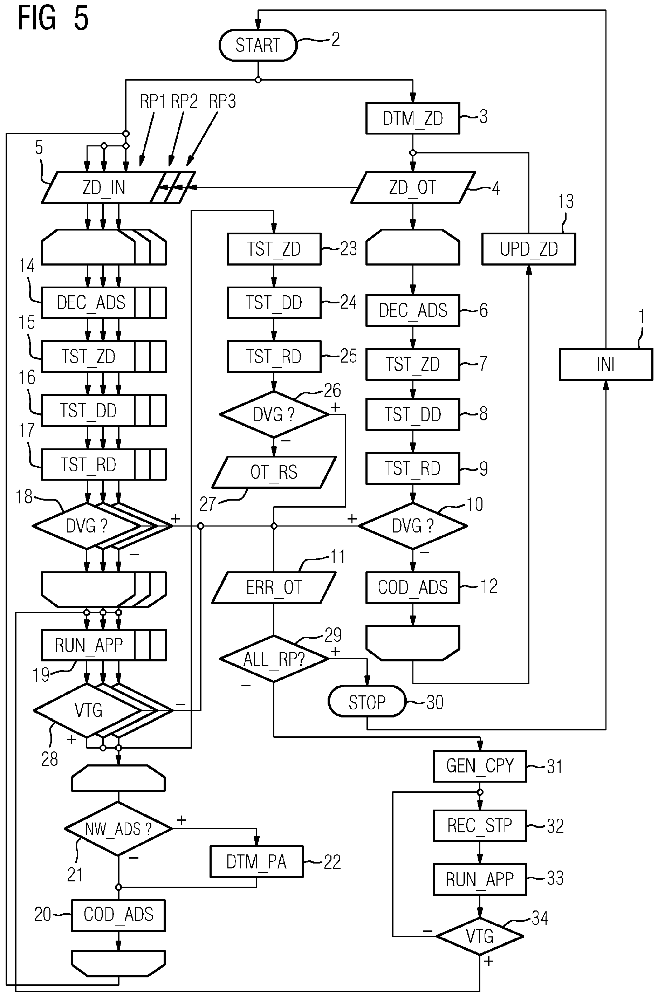

Anhand Figur 5 soll ein möglicher Verfahrensablauf für das Verfahren zum rechnergestützten Betreiben einer Speichereinheit sowie zum rechnergestützten parallelen Ausführen eines Applikationsprogramms mit anschließendem Voting VTG erläutert werden. Vor einem Start des Verfahrens wird ein Initialisierungsschritt (Schritt 1, kurz INI) durchgeführt, wobei dieser den ordnungsgemäßen Speicherzugriff auf eine nicht dargestellte Speichereinheit erlaubt. Nach dem Start (Schritt 2) des Verfahrens werden hier das Verfahren zum Durchführen von Prüfläufen der Speichereinheit auf der rechten Seite oben und in der Mitte oben, das Ausführen von Applikationsprogrammen AP1 ... AP5 im Regelbetrieb auf der linken Seite und ein Reparaturbetrieb auf der rechten Seite unten durchgeführt. Diese Teilbereiche können einzeln nacheinander bzw. vorzugsweise parallel durchgeführt werden und sind deshalb in einem gemeinsamen Ablaufdiagramm dargestellt.

Zunächst soll das Verfahren zum Durchführen des Prüflaufs erläutert werden. In einem Festlegungsschritt für die Zähldaten ZD (Schritt 3, kurz DTM_ZD) wird ein Startwert für die Zähldaten ZD festgelegt. Diese Zähldaten ZD werden in einem Ausgabeschritt für Zähldaten ZD (Schritt 4, kurz ZD_OT) bei Bedarf dem Verfahren zum Ausführen eines Applikationsprogramms (linke Seite) über einen Eingabeschritt für Zähldaten ZD (Schritt 35 kurz ZD_IN) zur Verfügung gestellt.

Der eigentliche Testlauf besteht aus sich wiederholenden Prozeduren, die für alle Applikationsdatensätze ADS durchgeführt wird, die in der Speichereinheit gespeichert sind (in Figur 5 auf der rechten Seite dargestellt). Für jeden Applikationsdatensatz ADS mit den aktuellen Zählelementen der Zähldaten ZD wird Folgendes durchgeführt:
In einem Decodierungsschritt für den Applikationsdatensatz ADS (Schritt 6, kurz DEC_ADS) wird der Applikationsdatensatz ADS decodiert. In einem Prüfschritt für die Zähldaten ZD (Schritt 7, kurz TST_ZD) wird geprüft, ob das Zählelement dem aktuell in Prüfung befindlichen Prüflauf oder dem letzten Prüflauf entspricht. In einem Prüflauf für die Diversitätskenndaten DD1 ... DD4 (Schritt 8, kurz TST_DD) wird geprüft, ob der Applikationsdatensatz ADS Diversitätskenndaten DD1 ... DD4 aufweist, die dem zur Verfügung stehenden Vorrat VR von Diversitätskenndaten DD1 ... DD4 (vgl. Figuren 3 und 4) entspricht. In einem Prüfschritt für die Redundanzdaten RD (Schritt 9, kurz TST_RD) wird geprüft, ob die Redundanzdaten RD einen erwarteten Wert, insbesondere einen Vorbelegungswert, aufweisen (optional).

Sind alle Prüfschritte durchgeführt worden, wird in einem Abfrageschritt für Abweichungen (Schritt10, kurz DVG?) geprüft, ob einer der Prüfschritte, wie vorstehend beschrieben, Abweichungen von dem erwarteten Ergebnis hervorgebracht hat. Ist dies der Fall, wird ein Fehler in einem Ausgabeschritt für Fehler (Schritt 11, kurz ER_OT) ausgegeben (hierzu im Folgenden mehr). Ist dies nicht der Fall, wird in einem Codierungsschritt für den Applikationsdatensatz ADS (Schritt 12, kurz COD_ADS) der geprüfte Applikationsdatensatz ADS wieder codiert, wobei dieser immer in den Zähldaten ZD mit dem Zählelement des aktuellen Prüflaufs codiert wird. Ist der Prüflauf für alle Applikationsdatensätze ADS durchgeführt, weisen diese somit das aktuelle Zählelement in den Zähldaten ZD auf, und die Zähldaten ZD können in einem Aktualisierungsschritt für die Zähldaten ZD (Schritt 13, kurz UPD_ZD) für das ablaufende Dienstprogramm dahingehend aktualisiert werden, dass diese nun das Zählelement desjenigen Prüflaufs beinhalten, der anschließend begonnen wird.

Bei dem Verfahren zum rechnergestützten Ausführen eines Applikationsprogramms (linke Seite in Figur 5) wird nach dem bereits erwähnten Eingabeschritt 5 für die Zähldaten ZD wiederholt für alle erforderlichen Applikationsdatensätze ADS der durch das Applikationsprogramm durchgeführten Applikation der Decodierungsschritt für den betreffenden Applikationsdatensatz ADS (Schritt 14, kurz DEC_ADS) durchgeführt. Anschließend wird, wie bereits für den Prüflauf beschrieben, ein Prüfschritt für die Zähldaten ZD (Schritt 15, kurz TST_ZD), ein Prüfschritt für die Diversitätskenndaten DD1 ... DD4 (Schritt 16, kurz TSD_DD) und ein Prüfschritt für die Redundanzdaten RD (Schritt 17, kurz TSD_RD, optional) durchgeführt.

Die Besonderheit ist, dass die Applikation auf drei nicht dargestellten Recheninstanzen RP1, RP2, RP3 (vergleiche die Recheninstanzen im ersten Programmkomplex PK1 in Figur 2) mit je einer unterschiedlichen Diversität durchgeführt wird, sodass die in dem Prüfschritt für die Diversitätskenndaten DD1 ... DD4 (Schritt 18, kurz TSD_DT) geprüften Diversitätskenndaten DD1 ... DD4 genau der jeweiligen Diversität der betreffenden Recheninstanz entsprechen müssen, auf der das Applikationsprogramm durchgeführt werden soll. Die nachfolgenden Schritte, die in den drei Recheninstanzen RP1, RP2, PR3 gleichermaßen und vorzugsweise zeitlich parallel durchgeführt werden (zur nacheilenden Durchführung im Folgenden noch mehr), werden der besseren Übersichtlichkeit halber daher überlappend dargestellt.

Auch beim Ausführen des Applikationsprogramms wird für jeden erforderlichen Applikationsdatensatz ADS in dem Prüfschritt 18 für Abweichungen DVG? in jeder der drei Recheninstanzen RP1, RP2, RP3 geprüft, ob die Prüfschritte TST... Abweichungen von den erwarteten Inhalten der Applikationsdatensätze ADS identifiziert haben. Ist dies der Fall, wird, wie bereits erklärt, in dem Ausgabeschritt 11 für Fehler ERR_OT ein Fehler ausgegeben. Ansonsten wird die Prüfung der Applikationsdatensätze ADS fortgeführt, bis alle für das Applikationsprogramm erforderlichen Applikationsdatensätze ADS geprüft wurden. Nur unter dieser Voraussetzung wird in einem Ausführungsschritt für das Applikationsprogramm (Schritt 19, kurz RUN_APP) in der betreffenden der drei Recheninstanzen RP1, RP2, RP3 das Applikationsprogramm jeweils parallel zu den anderen beiden (fehlerfreien) Recheninstanzen ausgeführt.

Die Prüfung der Applikationsdatensätze ADS kann bevorzugt für das Applikationsprogramm schrittweise für jede als Ergebnis erzeugte Nachricht (die ebenfalls in neuen oder geänderten Applikationsdatensätzen ADS enthalten ist) erfolgen (in Figur 5 nicht näher dargestellt). D. h., dass die Abarbeitung des Applikationsprogramms in Schritte der Abarbeitung unterteilt ist. In dem Sinne sind alle für das Applikationsprogramm erforderlichen und durch das Applikationsprogramm generierten Applikationsdatensätze ADS zu prüfen, die jeweils für den nächsten durch das Applikationsprogramm durchzuführenden Schritt erforderlich sind. In dem Ausführungsschritt 19 für das Applikationsprogramm RUN_APP wird dann jeweils der betreffende Schritt des Applikationsprogramms ausgeführt. Für jedes Applikationsprogramm ergeben sich dann in Figur 5 mehrere Rekursionsschleifen, die nach dem im Folgenden noch beschriebenen Kodierungsschritt für den Applikationsdatensatz ADS (Schritt 20, kurz COD_ADS auf der linken Seite von Figur 5) wieder zu dem Eingabeschritt der Zähldaten ZD führt.

Der Ausführungsschritt wird durch ein Voting VTG (Schritt 28) abgeschlossen, bei dem in dem Ausführungsschritt durch die drei Recheninstanzen zeitlich parallel erzeugte Nachrichten, die zumindest hinsichtlich der Applikationsdaten AD im Datenabschnitt DA identisch sein müssen, verglichen werden. Fällt das Voting VTG positiv aus, d. h. ist die Mehrheit der Nachrichten gleich, wird diese Mehrheit (also zwei oder drei der drei Ergebnisse des in Figur 5 dargestellten 2oo3-Systems) für den nächsten Schritt NW_ADS? (s. u.) freigegeben.

Nach dem Ausführungsschritt für das Applikationsprogramm RUN_APP wird geprüft, ob es sich bei den nach der Ausführung des Applikationsprogramms bestehenden Applikationsdatensätzen ADS um neue Applikationsdatensätze ADS handelt. Diese Prüfung (Abfrageschritt 21 für neuen Applikationsdatensatz ADS, kurz NW_ADS? genannt) ist erforderlich, damit neuen Applikationsdatensätzen ADS in einem Festlegungsschritt für einen Prüfdatenabschnitt PA (Schritt 22, kurz DTM_PA) Prüfdaten zugeordnet werden, die einer anschließenden Prüfung TST... des neuen Applikationsdatensatzes ADS in den weiteren Schritten des vorgestellten Verfahrens ermöglicht. In jedem Fall wird der neue Applikationsdatensatz ADS bzw. auch die alten und geänderten Applikationsdatensätze ADS in dem Codierungsschritt 20 für Applikationsdatensätze ADS COD_ADS wieder codiert und in der Speichereinheit abgespeichert. Anschließend kann ein weiteres Applikationsprogramm oder, wie oben beschrieben, ein weiterer Schritt eines laufenden Applikationsprogramms durchgeführt werden (Wiederholung von ZD_IN, Eingabeschritt für Zähldaten ZD und der nachfolgenden Schritte).

Der Durchführungsschritt 19 für das Applikationsprogramm RUN_APP kann auch Ergebnisse erzielen, welche (vorzugweise über den Message Broker MB, vgl. Figur 2) als Nachrichten ausgegeben werden sollen. Bevor dies geschieht, kann optional, dargestellt in der Mitte von Figur 5, ebenfalls eine Testprozedur durchlaufen werden. Hierbei werden die bereits erläuterten Schritte, also der Prüfschritt für die Zähldaten ZD (Schritt 23, kurz TSD_ZD), der Prüfschritt für die Diversitätskenndaten DD1 ... DD4 (Schritt 24, kurz TSD_DD) sowie (optional) der Prüfschritt für die Redundanzdaten RD (Schritt 25, kurz TSD_RD) durchgeführt. In einem nachfolgenden Abfrageschritt für Abweichungen (Schritt 26, kurz DVG?) wird wieder geprüft, ob bei den Prüfschritten Abweichungen festgestellt werden konnten. Wenn dies der Fall ist, wird, wie bereits beschrieben, in einem Ausgabeschritt 11 für Fehler ERR_OT ein Fehlersignal erzeugt. Andernfalls wird in einem Ausgabeschritt für das Ergebnis (Schritt 27, kurz OT_RS) das Ergebnis ausgegeben und/oder in weiteren Schritten (beispielweise in einem anderen Programmkomplex gemäß Figur 2) weiterverarbeitet.

Für den Fall, dass in dem Ausgabeschritt 11 für Fehler ERR_OT ein Fehler ausgegeben wird, wird in dem Ausführungsbeispiel gemäß Figur 5 für die betroffene Recheninstanz der Reparaturbetrieb aufgenommen. Dieser soll im Folgenden näher erläutert werden.

Wenn bei dem Voting VTG (Schritt 28) nicht alle Nachrichten als gleich bewertet werden, jedoch eine Mehrheit der Nachrichten gleich ist (bei einem 2oo3-System also zwei von drei Nachrichten) dann wird der Reparaturbetrieb lediglich mit der Nachricht, die von den beiden gleichen Nachrichten abweicht, gestartet. Wenn sich keine Mehrheit von gleichen Nachrichten ermitteln lässt (bei einem 2oo3System liegen also drei unterschiedliche Nachrichten vor), dann wird der Reparaturbetrieb für alle Nachrichten eingeleitet. In jedem Fall erfolgt der Ausgabeschritt für Fehler ERR_OT. In einem nachfolgenden Abfrageschritt (Schritt 29, kurz ALL_RP?) wird geprüft, ob alle Nachrichten für den Reparaturbetrieb vorgesehen sind. Ist dies der Fall, wird das Verfahren der Abarbeitung des Applikationsprogramms gestoppt (Schritt 30, kurz STOP) und es erfolgt eine neue Initialisierung aller beteiligten Recheninstanzen, bevor diese wieder gestartet werden.

Für den Fall, dass die Mehrheit der Nachrichten identisch war, läuft das oben beschriebene Verfahren zum Abarbeiten des Applikationsprogramms (linke Seite von Figur 5) weiter, während der Reparaturbetrieb parallel hierzu aufgenommen wird (rechte Seite unten von Figur 5). Im Beispiel gemäß Figur 5 wird also mit zwei Recheninstanzen im Regelbetrieb das Applikationsprogramme AP1 ... AP5 weiterbearbeitet, während für eine Recheninstanz der Reparaturbetrieb eingeleitet wird.

Für den begleitenden Reparaturbetrieb wird zunächst in einem Kopierschritt (Schritt 31, kurz GEN_CPY) eine Zustandskopie der zum gegenwärtigen Zeitpunkt vorliegenden und am Regelbetrieb beteiligten Applikationsdatensätze ADS generiert. Da die betroffene Recheninstanz vom Regelbetrieb bereits ausgeschlossen ist, muss diese Zustandskopie von den Applikationsdatensätzen ADS einer der weiterlaufenden Recheninstanzen erzeugt werden. In einem nachfolgenden Aufnahmeschritt (Schritt 32, kurz REC_STP) werden die anschließend durch die ausgewählte weiterlaufende Recheninstanz erzeugten und geänderten Applikationsdatensätze ADS fortlaufend kopiert und abgespeichert. Sobald die Zustandskopie auf der betroffenen Recheninstanz geschrieben wurde, beginnt diese mit der nachträglichen Bearbeitung (Schritt 33, kurz RUN_APP) des Applikationsprogramms. Dabei verwendet die Recheninstanz, soweit erforderlich, auch die gespeicherten Applikationsdatensätze AD. Nach Durchführung der jeweils nachgeholten Schritte 33 erfolgt in der beschriebenen Weise ein Voting VTG (Schritt 34). Dabei wird die jeweils im Reparaturbetrieb erstellte Nachricht mit im Regelbetrieb erzeugten Nachrichten, die beispielsweise innerhalb eines die letzten zehn erzeugten Nachrichten enthaltenden Synchronisationsfensters liegen können, verglichen.

Wenn bei dem Voting VTG eine Übereinstimmung der verglichenen Nachrichten festgestellt werden kann, wird die betroffene Recheninstanz wieder in den Regelbetrieb eingegliedert, weil damit nachgewiesen ist, dass diese Recheninstanz im Reparaturbetrieb den Zeitverlust, der mit dem Aufspielen der Zustandskopie verbunden war, wieder aufgeholt hat. Um die Sicherheit bei der Wiedereingliederung zu erhöhen, kann auch vorgesehen werden, dass diese erst erfolgt, wenn zum Beispiel drei aufeinanderfolgende Nachrichten bei dem Voting VTG als übereinstimmend identifiziert werden konnten.

### Bezugszeichenliste

- AD: Applikationsdaten
- ADS: Applikationsdatensätze
- AP1: erstes Applikationsprogramm
- AP2: zweites Applikationsprogramm
- AP3: drittes Applikationsprogramm
- AP4: viertes Applikationsprogramm
- AP5: fünften Applikationsprogramm
- BL: Balise
- CL: Controller
- CLD: Cloud
- COD: Codiervorgang
- DA: Datenabschnitt
- DD1: erste Diversitätskenndaten
- DD2: zweite Diversitätskenndaten
- DD3: dritte Diversitätskenndaten
- DD4: vierte Diversitätskenndaten
- DEC: Decodiervorgang
- GL: Gleis
- GR: Gruppe
- GW: Gateway
- HR1: erster Hostrechner
- HR2: zweiter Hostrechner
- HR3: dritter Hostrechner
- KD1...KD13: Konfigurationsdaten
- KD1: erste Konfigurationsdaten
- KN: Knoten
- LS: Lichtsignal
- LZ: Leitzentrale
- MB: Message Broker
- PA: Prüfdatenabschnitt
- PK1 ...PK4: Programmkomplex
- PK1: erster Programmkomplex
- RD: Redundanzdaten
- RE: Lesevorgang
- RU: Rechenumgebung
- RZ: Rechenzentrum
- S1: erste Schnittstelle
- S2: zweite Schnittstelle
- S3: dritte Schnittstelle
- S4: vierte Schnittstelle
- S5: fünfte Schnittstelle
- S6: sechste Schnittstelle
- S7: siebte Schnittstelle
- S8: achte Schnittstelle
- S9: neunte Schnittstelle
- S10: zehnte Schnittstelle
- S11: elfte Schnittstelle
- S12: zwölfte Schnittstelle
- S13: dreizehnte Schnittstelle
- S14: vierzehnte Schnittstelle
- S15: fünfzehnte Schnittstelle
- SE1: erste Speichereinheit
- SE2: zweite Speichereinheit
- SE3: dritte Speichereinheit
- STW: Stellwerk
- TG: Taktgeber
- TG,VT,GW,MB: Teilprogramme
- VR: Vorrat
- VT: Voter
- VTG: Voting
- WA: Weichenantrieb
- WH: Weiche
- WT: Schreibvorgang
- ZD: Zähldaten

## Patentansprüche

1. Verfahren zum Durchführen eines technischen Prozesses,
a) bei dem Applikationsprogramme (AP1 ... AP5) in einer Vielzahl N von Recheninstanzen redundant ausgeführt werden und
b) auf der Basis eines MooN-Systems, wobei M mindestens zwei und N mindestens drei ist, bei einem Voting (VTG) ein Vergleichen der Vielzahl N von Ergebnissen des redundanten Ausführens der Applikationsprogramme (AP1 ... AP5) durchgeführt wird, wobei
c) in dem Fall, dass eine Minderheit der Ergebnisse von einer Mehrheit der Ergebnisse identischen Inhalts verschieden ist, die besagte Minderheit von Ergebnissen bei dem Durchführen des technischen Prozesses unberücksichtigt bleibt,
d) für den Fall gemäß c) die von der Erzeugung der Minderheit von Ergebnissen betroffene, mindestens eine Recheninstanz, von der Durchführung des technischen Prozesses ausgeschlossen wird,
e) für den Fall gemäß c) von einer von der Erzeugung der Mehrheit der Ergebnisse betroffenen Recheninstanz von einem neu zu initialisierenden Status eine Zustandskopie erstellt, wird sowie
f) bei der neuen Initialisierung der Status der betroffenen Recheninstanz entsprechend der Zustandskopie hergestellt wird
g) danach die betroffene mindestens eine Recheninstanz wieder in die Durchführung des technischen Prozesses eingegliedert wird,
**dadurch gekennzeichnet**,
e1) dass von der von der Erzeugung der Mehrheit der Ergebnisse betroffenen Recheninstanz zusätzlich alle ab Erstellung der Zustandskopie an die Recheninstanzen gesendeten Nachrichten und deren Reihenfolge gespeichert werden, und
f1) bei der neuen Initialisierung der status der betroffenen Recheninstanz alle gespeicherten Nachrichten in der gespeicherten Reihenfolge von der betroffenen Recheninstanz bearbeitet werden, bis die betroffene Recheninstanz wieder synchron mit den nicht von der neuen Initialisierung betroffenen Recheninstanzen läuft.

2. Verfahren nach Anspruch 1, wobei
h) in dem Fall, dass eine Mehrheit von Ergebnissen identischen Inhalts bei dem Voting (VTG) nicht festgestellt werden kann, die Vielzahl N der Ergebnisse bei dem Durchführen des technischen Prozesses unberücksichtigt bleibt,
i) für den Fall gemäß h) die Vielzahl N von Recheninstanzen von der Durchführung des technischen Prozesses ausgeschlossen wird,
j) Die Vielzahl N von Recheninstanzen neu initialisiert wird, wobei die redundante Ausführung von Applikationsprogrammen (AP1 ... AP5) neu gestartet wird.

3. Verfahren nach Anspruch 1 oder 2, wobei die Zustandskopie von einer von der neuen Initialisierung nicht betroffenen Recheninstanz erst erstellt wird, sobald der Fall gemäß c) von Anspruch 1 eintritt.

4. Verfahren nach einem der voranstehenden Ansprüche, wobei der Inhalt der Ergebnisse der Mehrheit von Recheninstanzen von mindestens einem vorhergehenden Vergleichsschritt, vorzugsweise mindestens 10 vorhergehenden Vergleichsschritten, gespeichert werden und beim Bearbeiten gemäß Schritt f) von Anspruch 1 der Nachrichten berechnete Ergebnisse in mindestens einem dieser Bearbeitung nachgelagerten Vergleichsschritt zum Synchronisieren mit mindestens einem der genannten gespeicherten Ergebnisse verglichen wird.

5. Verfahren nach Anspruch 4, wobei die betroffene mindestens eine Recheninstanz wieder in den technischen Prozess eingegliedert wird, wenn in mindestens einem nachgelagerten Vergleichsschritt, vorzugsweise in mindesten drei aufeinanderfolgenden, in der Reihenfolge der gespeicherten Ergebnisse durchgeführten nachträglichen Vergleichsschritten eine Übereinstimmung des jeweiligen gespeicherten Ergebnisses mit dem zugehörigen berechneten Ergebnis festgestellt wird.

6. Verfahren nach einem der vorhergehenden Ansprüche, wobei die Reihenfolge der Nachrichten unter Berücksichtigung des Zeitpunktes des Sendens der Nachrichten bestimmt wird, wobei die Reihenfolge der zeitlichen Abfolge des Sendens entspricht.

7. Verfahren nach Anspruch 6, wobei
der Zeitpunkt des Sendens der Nachrichten als digitaler Zeitstempel abgespeichert wird.

8. Verfahren nach einem der vorhergehenden Ansprüche, wobei die Zustandskopie und die Nachrichten über einen Nachrichtenbroker versendet und empfangen werden.

9. Verfahren nach Anspruch 8, wobei
der Nachrichtenbroker mit einem Publish-Subscribe-Verfahren arbeitet.

10. Verfahren nach einem der vorhergehenden Ansprüche, wobei
k) Nachrichten in Datenabschnitte (DA) enthaltenden Applikationsdatensätzen (ADS) enthalten sind,
l) Voting (VTG) mit mehrfach identisch geänderten redundanten Datenabschnitten (DA) als Ergebnissen durchgeführt wird,
m) für den Fall gemäß c) von Anspruch 1 die Applikationsdatensätze (ADS), die für eine Fehleridentifizierung ursächliche Datenabschnitte (DA) enthalten, bei dem Durchführen des technischen Prozesses unberücksichtigt bleiben.

11. Ein Verfahren nach Anspruch 10, wobei eine Speichereinheit der Recheninstanzen derart betrieben wird, dass
n) Applikationsdatensätze (ADS) in der Speichereinheit abgelegt werden und vor dem Ablegen codiert werden,
o) Applikationsdatensätze (ADS) aus der Speichereinheit abgerufen werden und nach dem Abrufen decodiert werden,
wobei die Speichereinheit auf Fehler überwacht wird, indem eine zeitliche Abfolge von rechnergestützten Prüfläufen für die Speichereinheit durchgeführt wird, und wobei die neue Initialisierung der betroffenen Recheninstanz gemäß Schritt f) von Anspruch 1 erst begonnen wird, wenn mindestens ein, vorzugsweise zwei aufeinanderfolgende Prüfläufe ergeben, dass keine Fehler vorliegen.

12. Verfahren nach Anspruch 11, wobei in dem Fall, dass ein Fehler in einem der Prüfläufe festgestellt wird, das Verfahren ab Schritt e) von Anspruch 1 durchgeführt wird.

13. Verfahren nach Anspruch 11 oder 12, wobei zum erstmaligen Codieren (COD) der Daten
p) mindestens ein Applikationsdatensatz (ADS), enthaltend Datenabschnitte (DA) mit Applikationsdaten (AD) für mindestens eines der Applikationsprogramme (AP1 ... AP5) und Prüfdatenabschnitte (PA) erzeugt oder ausgewählt wird,
q) für jeden Applikationsdatensatz (ADS) der Prüfdatenabschnitt (PA) mit Zähldaten (ZD), die den sich in der Durchführung befindenden Prüflauf kennzeichnen, belegt werden,
r) jeder Applikationsdatensatz (ADS) codiert und abgelegt wird,
und dass zum Prüfen der Daten in dem sich in der Durchführung befindenden Prüflauf nach dem Abrufen und Decodieren (DEC) der Applikationsdatensätze (ADS) jeweils
s) für einen Applikationsdatensatz (ADS) ein Fehler festgestellt wird, wenn die Zähldaten (ZD) weder den sich in der Durchführung befindenden Prüflauf noch den jüngsten vollständig durchgeführten Prüflauf kennzeichnen,
t) der Prüfdatenabschnitt (PA) des betreffenden Applikationsdatenabschnitts mit Zähldaten (ZD), die den sich in der Durchführung befindenden Prüflauf kennzeichnen, belegt werden, wenn kein Fehler festgestellt wurde,
u) der betreffende Applikationsdatensatz (ADS) wieder codiert und abgelegt wird, wenn kein Fehler festgestellt wurde.

14. Computerprogrammprodukt mit Programmbefehlen zur Durchführung des Verfahrens nach einem der Ansprüche 1 - 11.

15. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## Claims

1. Method for performing a technical process,
a) in which application programs (AP1 ... AP5) are executed redundantly in a plurality N of computing instances and
b) on the basis of an MooN system, wherein M is at least two and N is at least three, a comparison of the plurality N of results of the redundant execution of the application programs (AP1 ... AP5) is performed in a voting (VTG), wherein
c) in the event of a minority of the results being different from a majority of the results with identical content, said minority of results is not taken into account during the performance of the technical process,
d) in a case according to step c), the at least one computing instance affected by the generation of the minority of results is excluded from the performance of the technical process,
e) in a case according to step c), a state copy of a status to be reinitialised is created by a computing instance affected by the generation of the majority of the results, and
f) during the reinitialisation, the status of the affected computing instance is established according to the state copy,
g) the at least one computing instance affected is then reintegrated into the performance of the technical process,
**characterised in that**
e1) additionally, all messages sent to the computing instances from the creation of the state copy and their sequence are stored by the computing instance affected by the generation of the majority of the results, and
f1) during the reinitialisation, the status of the affected computing instance all stored messages are processed in the stored sequence by the affected computing instance until the affected computing instance runs synchronously again with the computing instances not affected by the reinitialisation.

2. Method according to claim 1, wherein
h) in the event that a majority of results with identical content cannot be determined in the voting (VTG), the plurality N of results is not taken into account during the performance of the technical process,
i) in a case according to step h), the plurality N of computing instances is excluded from the performance of the technical process,
j) the plurality N of computing instances is reinitialised, wherein the redundant execution of application programs (AP1 ... AP5) is restarted.

3. Method according to claim 1 or 2, wherein
the state copy is only created by a computing instance not affected by the reinitialisation as soon as the case according to step c) in claim 1 occurs.

4. Method according to one of the preceding claims, wherein the content of the results of the majority of computing instances from at least one preceding comparison step, preferably at least 10 preceding comparison steps, are stored and, during processing of the messages according to step f), in claim 1, calculated results are compared with at least one of said stored results in at least one comparison step downstream of this processing for synchronisation.

5. Method according to claim 4, wherein the at least one computing instance affected is reintegrated into the technical process if a match between the respective stored result and the associated calculated result is determined in at least one downstream comparison step, preferably in at least three successive subsequent comparison steps performed in the sequence of the stored results.

6. Method according to one of the preceding claims, wherein the sequence of the messages is determined taking into account the time of sending the messages, wherein the sequence corresponds to the chronological sequence of the sending.

7. Method according to claim 6, wherein
the time of sending the messages is saved as a digital time stamp.

8. Method according to one of the preceding claims, wherein the state copy and the messages are sent and received by a message broker.

9. Method according to claim 8, wherein
the message broker works with a publish/subscribe method.

10. Method according to one of the preceding claims, wherein
k) messages are contained in application data sets (ADS) containing data sections (DA),
l) voting (VTG) is performed with redundant data sections (DA) that have been changed identically several times as results,
m) in a case according to step c) in claim 1, the application data sets (ADS) containing data sections (DA) causative for error identification are not taken into account during the performance of the technical process.

11. Method according to claim 10, wherein a memory unit of the computing instances is operated in such a way that
n) application data sets (ADS) are filed in the memory unit and are coded before being filed,
o) application data sets (ADS) are retrieved from the memory and decoded after retrieval,
wherein the memory unit is monitored for errors by performing a chronological sequence of computer-aided test runs for the memory unit, and wherein the reinitialisation of the affected computing instance according to step f) in claim 1 is only started when at least one, preferably two, successive test runs reveal that no errors are present.

12. Method according to claim 11, wherein,
in the event of an error being determined in one of the test runs, the method is performed from step e) in claim 1.

13. Method according to claim 11 or 12, wherein,
for the initial coding (COD) of the data,
p) at least one application data set (ADS) containing data sections (DA) with application data (AD) for at least one of the application programs (AP1 ... AP5) and test data sections (PA) is generated or selected,
q) for each application data set (ADS), the test data section (PA) is occupied by count data (ZD) that identifies the test run being performed,
r) each application data set (ADS) is coded and filed,
and that, in order to test the data in the test run being performed after retrieving and decoding (DEC) the application data sets (ADS), in each case
s) an error is determined for an application data set (ADS) if the count data (ZD) does not identify either the test run being performed or the most recent test run that has been completed,
t) the test data section (PA) of the relevant application data section is occupied by count data (ZD) that identifies the test run being performed if no error was determined,
u) the relevant application data set (ADS) is coded and filed again if no error was determined.

14. Computer program product with program instructions for performing the method according to one of claims 1 - 11.

15. Provisioning apparatus for the computer program product according to the last preceding claim, wherein the provisioning apparatus stores and/or provides the computer program product.

## Revendications

1. Procédé pour effectuer un processus technique,
a) dans lequel on exécute de manière redondante des programmes (AP1 ... AP5) d'application dans une pluralité N d'instances de calcul et
b) sur la base d'un système MooN, dans lequel M est au moins deux et N au moins trois, lors d'une votation (VTG) on effectue une comparaison de la pluralité N de résultats de l'exécution redondante des programmes (AP1 ... AP5) d'application, dans lequel
c) dans le cas où une minorité des résultats est différente d'une majorité des résultats de contenu identique, on néglige ladite minorité de résultats, lors de l'exécution du processus technique,
d) dans le cas suivant c), on exclut de l'exécution du processus technique, au moins une instance de calcul concernée par la production de la minorité de résultats,
e) dans le cas suivant c) d'une instance de calcul concernée par la production de la minorité des résultats, on établit par un statut à réinitialiser une copie d'état, ainsi que
f) dans la réinitialisation, on produit le statut de l'instance de calcul concernée conformément à la copie d'état,
g) ensuite on incorpore la au moins une instance de calcul concernée à nouveau dans l'exécution du processus technique,
caractérisé
e1) par l'instance de calcul concernée par la production de la minorité des résultats, on met en mémoire supplémentairement tous les messages et leurs successions envoyés depuis l'établissement de la copie d'état aux instances de calcul, et
f1) dans la réinitialisation du statut de l'instance de calcul concernée, on traite par l'instance de calcul concernée tous les messages mis en mémoire dans la succession mise en mémoire, jusqu'à ce que l'instance de calcul concernée se déroule à nouveau de manière synchrone avec les instances de calcul non concernées par la réinitialisation.

2. Procédé suivant la revendication 1, dans lequel
h) dans le cas où une majorité de résultats de contenu identique ne peut pas être constatée lors de la votation (VTG), on néglige la pluralité N des résultats lors de l'exécution du processus technique,
i) dans le cas suivant h) on exclut la pluralité N d'instances de calcul de l'exécution du processus technique,
j) on réinitialise la pluralité N d'instances de calcul, dans lequel on recommence l'exécution redondante de programmes (AP1 ... AP5) d'application.

3. Procédé suivant la revendication 1 ou 2, dans lequel
on établit la copie d'état d'une instance de calcul non concernée par la réinitialisation, dès que le cas suivant c) de la revendication 1 apparaît.

4. Procédé suivant l'une des revendications précédentes, dans lequel
on met en mémoire le contenu des résultats de la majorité d'instances de calcul par au moins un stade de comparaison précédent, de préférence par au moins 10 stades de comparaison précédents et, lors du traitement suivant le stade f) de la revendication 1 des messages, on compare des résultats calculés dans au moins un stade de comparaison en aval de ces traitements pour la synchronisation avec au moins l'un des résultats mentionnés mis en mémoire.

5. Procédé suivant la revendication 4, dans lequel
on réincorpore dans le processus technique la au moins une instance de calcul concernée, si, dans au moins un stade de comparaison en aval, de préférence dans au moins trois stades de comparaison postérieurs se succédant effectués dans la succession des résultats mis en mémoire, on constate une coïncidence du résultat respectif mis en mémoire avec le résultat calculé, qui lui appartient.

6. Procédé suivant l'une des revendications précédentes, dans lequel
on détermine la succession des messages en tenant compte de l'instant de l'émission des messages, dans lequel la succession correspond à la séquence temporelle de l'émission.

7. Procédé suivant la revendication 6, dans lequel
on met en mémoire l'instant de l'émission des messages sous la forme d'un horodatage numérique.

8. Procédé suivant l'une des revendications précédentes, dans lequel
on envoie et on reçoit les copies d'état et les messages par un courtier de messages.

9. Procédé suivant la revendication 8, dans lequel
le courtier de messages travaille avec un procédé publish-subscribe.

10. Procédé suivant l'une des revendications précédentes, dans lequel
k) des messages sont contenus dans des ensembles (ADS) de données d'application contenant des segments (DA) de données,
l) on effectue la votation (VTG) sous forme de résultats avec des segments (DA) de données redondants modifiés plusieurs fois de manière identique,
m) dans le cas suivant c) de la revendication 1, les ensembles (ADS) de données d'application, qui contiennent les segments (DA) de données à l'origine d'une identification d'erreur, sont négligés lors de l'exécution du processus technique.

11. Un procédé suivant la revendication 10, dans lequel
on fait fonctionner une unité de mémoire des instances de calcul, de manière
n) à mettre des ensembles (ADS) de données d'application dans l'unité de mémoire et à les coder avant de les mettre,
o) à appeler des ensembles (ADS) de données d'application de l'unité de mémoire et à les décoder après l'appel,
dans lequel on surveille, s'il apparaît des erreurs dans l'unité de mémoire, en effectuant une séquence temporelle d'essais assistés par ordinateur pour l'unité de mémoire, et dans lequel on ne fait commencer la réinitialisation de l'instance de recherche concernée suivant le stade f) de la revendication 1, que si au moins, de préférence deux essais successifs ont donné qu'il n'y a pas d'erreur.

12. Procédé suivant la revendication 11, dans lequel dans le cas où on constate une erreur dans l'un des essais, on effectue le procédé à partir du stade e) de la revendication 1.

13. Procédé suivant la revendication 11 ou 12, dans lequel pour le codage (COD) pour la première fois des données
p) on produit et on choisit au moins un ensemble (ADS) de données d'application contenant des segments (DA) de données ayant des données (AD) d'application pour au moins l'un des programmes (AP1 ... AP5) d'application et des segments (PA) de données d'essai,
q) pour chaque ensemble (ADS) de données d'application, on impose le segment (PA) de données d'essai ayant des données (ZD) numériques, qui caractérisent l'essai se trouvant en exécution,
r) on code et on met en mémoire chaque ensemble (ADS) de données d'application,
et en ce que pour l'essai des données dans l'essai se trouvant en exécution après l'appel et le décodage (DEC) des ensembles (ADS) de données d'application respectivement
s) pour un ensemble (ADS) de données d'application on constate une erreur, si les données (ZD) numériques ne caractérisent ni l'essai se trouvant en application, ni l'essai effectué complètement dernièrement,
t) on impose au segment (PA) de données d'essai du segment de données d'application concerné des données (ZD) numériques, qui caractérisent l'essai se trouvant en exécution, s'il n'a pas été constaté d'erreur,
u) on recode et remet en mémoire l'ensemble (ADS) de données d'application concerné, si on n'a pas constaté d'erreur.

14. Produit de programme d'ordinateur ayant des instructions de programme pour exécuter le procédé suivant l'une des revendications 1 à 11.

15. Dispositif de mise à disposition du produit de programme d'ordinateur suivant la revendication mentionnée en dernier, le dispositif de mise à disposition mettant en mémoire et/ou à disposition le produit de programme d'ordinateur.
